(19) Europäisches Patentamt
European Patent Office
Office européen des brevets

(11) **EP 4 437 821 A1**

(12) **EUROPEAN PATENT APPLICATION**
published in accordance with Art. 153(4) EPC

(43) Date of publication:
**02.10.2024 Bulletin 2024/40**

(21) Application number: **22915668.2**

(22) Date of filing: **07.12.2022**

(51) International Patent Classification (IPC):
***A01B 69/00*** (2006.01)

(52) Cooperative Patent Classification (CPC):
**A01B 69/00**

(86) International application number:
**PCT/JP2022/045041**

(87) International publication number:
**WO 2023/127437 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2021 JP 2021211939**

(71) Applicant: **Kubota Corporation**
**Osaka 556-8601 (JP)**

(72) Inventors:
• **MIYASHITA, Shunsuke**
**Sakai-shi, Osaka 590-0908 (JP)**
• **TAMBO, Toru**
**Sakai-shi, Osaka 590-0908 (JP)**
• **NAGAO, Mitsuaki**
**Sakai-shi, Osaka 590-0908 (JP)**

(74) Representative: **Müller-Boré & Partner**
**Patentanwälte PartG mbB**
**Friedenheimer Brücke 21**
**80639 München (DE)**

(54) **AGRICULTURAL MACHINE**

(57) An agricultural machine includes: an image recognition system to detect, from an acquired image, a row region comprising at least one of a crop and a ridge made on a ground surface of a field; a positioning system to acquire an ego-position; traveling equipment including a wheel responsible for steering; and a controller configured to perform either one of: automatic path travel, wherein the traveling equipment is caused to travel along a target path based on the positioning system; and row-following travel, wherein the traveling equipment is caused to travel along a row region that is detected by the image recognition system.

FIG.1

**Description**

## TECHNICAL FIELD

The present disclosure relates to an agricultural machine.

## BACKGROUND ART

Research and development has been directed to the automation of work vehicles, such as tractors, to be used in fields. For example, work vehicles have been put to practical use which travel via automatic steering by utilizing a positioning system capable of precise positioning, e.g., GNSS (Global Navigation Satellite System). Work vehicles that automatically perform speed control as well as automatic steering have also been put to practical use.

Moreover, vision guidance systems are being developed which detect rows of crops (crop rows) or ridges in a field by using an imaging device such as a camera, and control the travel of a work vehicle along the detected crop rows or ridges.

Patent Document 1 discloses a work machine that travels along a ridge in cultivated land where crops are planted in ridges which are formed in rows. Patent Document 1 describes binarizing a raw image acquired by capturing cultivated land from obliquely above with an onboard camera, and thereafter generating a planar perspective projection image.

## CITATION LIST

### PATENT LITERATURE

[Patent Document 1] Japanese Laid-Open Patent Publication No. 2016-208871

## SUMMARY OF INVENTION

### TECHNICAL PROBLEM

With the implement of Patent Document 1, when rows of crops and ridges do not exist on the field, travel must be performed by manual steering.

The present disclosure provides an agricultural machine that can solve such problems.

### SOLUTION TO PROBLEM

In an illustrative, non-limiting embodiment, an agricultural machine according to the present disclosure includes: an image recognition system to detect, from an acquired image, a row region comprising at least one of a crop and a ridge made on a ground surface of a field; a positioning system to acquire an ego-position; traveling equipment including a wheel responsible for steering; and a controller configured to perform either one of: automatic path travel, wherein the traveling equipment is caused to travel along a target path based on an ego-position that is acquired by the positioning system; and row-following travel, wherein the traveling equipment is caused to travel along a row region that is detected by the image recognition system.

General or specific aspects of various example preferred embodiments of the present disclosure may be implemented using a device, a system, a method, an integrated circuit, a computer program, a non-transitory computer-readable storage medium, or any combination thereof. The computer-readable storage medium may be inclusive of a volatile storage medium, or a non-volatile storage medium. The device may include a plurality of devices. In the case where the device includes two or more devices, the two or more devices may be disposed within a single apparatus, or divided over two or more separate apparatuses.

### ADVANTAGEOUS EFFECTS OF INVENTION

According to embodiments of the present disclosure, based on the presence or absence of rows of crops and ridges, etc., in a field, it is possible to switch automatic steering as appropriate.

## BRIEF DESCRIPTION OF DRAWINGS

[FIG. 1] A block diagram schematically showing an example of a basic configuration of an agricultural machine according to the present disclosure.

[FIG. 2] A block diagram showing an example configuration of an image recognition system.

[FIG. 3] A diagram schematically showing an example where a start switch is provided in the neighborhood of a steering wheel of the agricultural machine.

[FIG. 4] A flowchart showing an example procedure of determining whether row-following travel is possible or not.

[FIG. 5] A perspective view showing another example of a display device.

[FIG. 6] A diagram showing an example screen on which a text, symbol, or other notification indicating whether row-following travel is possible or not is displayed.

[FIG. 7] A diagram showing an example of travel of a work vehicle in an automatic path travel mode.

[FIG. 8] A diagram schematically showing an example of a target path for a work vehicle that travels in a field in the automatic path travel mode.

[FIG. 9] A diagram schematically showing how an imaging device that is mounted to an agricultural machine may image the ground surface.

[FIG. 10] A perspective view schematically showing a relationship among a body coordinate system $\Sigma b$ and a camera coordinate system $\Sigma c$ that are fixed to the agricultural machine and a world coordinate system $\Sigma w$ that is fixed to the ground surface.

[FIG. 11] A top view schematically showing a portion of a field in which a multiple crop rows are made on the ground surface.

[FIG. 12] A diagram schematically showing an example of an image that is acquired by the imaging device of the agricultural machine shown in FIG. 11.

[FIG. 13] A top view schematically showing a state where the position and orientation (angle in yaw directions) of the agricultural machine are adjusted.

[FIG. 14] A diagram showing an example of an image acquired by the imaging device of the agricultural machine in the state of FIG. 13.

[FIG. 15] A block diagram schematically showing an example configuration of a processing device in the first embodiment of the present disclosure.

[FIG. 16] A monochromatic image corresponding to one frame of image, among time-series color images acquired by an onboard camera mounted on a tractor.

[FIG. 17] A diagram showing an enhanced image resulting from converting the RGB values of one frame of image among time-series color images RGB values into an excess green index (ExG=2×g-r-b).

[FIG. 18] A histogram of an excess green index (ExG) in the image of FIG. 17.

[FIG. 19] A diagram showing an example of a plan view image (overhead view image) being classified into first pixels (e.g., crop pixels) and second pixels (background pixels).

[FIG. 20] A perspective view schematically showing the relative locations between: each of a camera coordinate system $\Sigma c1$ and a camera coordinate system $\Sigma c2$; and a reference plane Re.

[FIG. 21] A schematic diagram showing an example in which the direction of crop rows in a plan view image and the direction of scanning lines are parallel.

[FIG. 22] A diagram schematically showing an example of a total value histogram, as obtained with respect to the plan view image of FIG. 21.

[FIG. 23] A schematic diagram showing an example where the direction of crop rows and the direction of scanning lines intersect in a plan view image.

[FIG. 24] A diagram schematically showing an example of a total value histogram, as obtained with respect to the plan view image of FIG. 23.

[FIG. 25] A flowchart showing an example algorithm by which a processing device in an embodiment of the present disclosure determines edge lines of a crop row.

[FIG. 26] A diagram showing a total value histogram obtained from the plan view image of FIG. 19.

[FIG. 27] A block diagram showing processes that are executed by a processing device according to an embodiment of the present disclosure.

[FIG. 28] A diagram for describing an implementation in which a plan view image is split into a plurality of blocks.

[FIG. 29] A diagram schematically showing a relationship between positions of scanning lines and total values of index values for each of the blocks in FIG. 28.

[FIG. 30] A diagram showing an example of crop row centers in each of the blocks in FIG. 29 and approximation lines for the crop row centers.

[FIG. 31] A top view showing examples of edge lines of crop rows as determined from the approximation lines in FIG. 30.

[FIG. 32] A diagram for describing a method which, in the case where crop rows include portions that are bent in curve shapes, splits a whole or a part of the plan view image into a plurality of blocks, and determines the positions of edge lines for each of the plurality of blocks.

[FIG. 33] A diagram schematically showing a relationship between positions of scanning lines and total values of index values (histogram) for each of the blocks in FIG. 32.

[FIG. 34] A diagram showing an example of crop row centers in each of the blocks in FIG. 33 and approximation lines for the crop row centers.

[FIG. 35] A top view showing examples of edge lines of crop rows as determined based on the approximation curves in FIG. 34.

[FIG. 36] A perspective view schematically showing rows of ridges made on the ground surface.

[FIG. 37] A diagram showing an image acquired from the imaging device at time t.

[FIG. 38] A diagram schematically showing a correspondence of feature points between an image acquired from the imaging device at time t and an image acquired at time t+1.

[FIG. 39] A perspective view schematically showing the movements of feature points on a ridge and an intermediate region (work path) appearing in images acquired by the imaging device.

[FIG. 40] A diagram schematically showing a relationship between: the amount of movement (first amount of movement) of a feature point projected onto the image plane; and the amount of movement (second amount of movement) of the feature point projected onto the reference plane.

[FIG. 41] A block diagram showing processes that are executed by a processing device according to a second embodiment of the present disclosure.

[FIG. 42] A diagram showing a relationship between a mean value of heights of feature points on a scanning line and the position of the scanning line.

[FIG. 43] A diagram showing an example of a basic configuration of an image recognition system according to a third embodiment of the present disclosure.

[FIG. 44] A diagram showing an example of an image which the processing device has acquired from the imaging device.

[FIG. 45] A diagram showing a portion of the image of FIG. 44.

[FIG. 46] A top view schematically showing a portion of the ground surface in which crop rows are made.

[FIG. 47] A diagram schematically showing a positional relationship between: points **P3** and **P4** which are contained in portions of front wheels appearing in an image; and corresponding points **P3'** and **P4'** on the reference plane **Re.**

[FIG. 48] A perspective view showing an example appearance of an agricultural machine according to an embodiment of the present disclosure.

[FIG. 49] A side view schematically showing an example of the agricultural machine to which an implement is attached.

[FIG. 50] A block diagram showing an example of a schematic configuration of an agricultural machine and an implement.

[FIG. 51] A flowchart showing an operation of manually switching between automatic path travel and row-following travel.

## DESCRIPTION OF EMBODIMENTS

Hereinafter, preferred embodiments of the present disclosure will be described more specifically. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

The following preferred embodiments are only exemplary, and the technique according to the present disclosure is not limited to the following preferred embodiments. For example, numerical values, shapes, materials, steps, and orders of steps, layout of a display screen, etc., that are indicated in the following preferred embodiments are only exemplary, and admit of various modifications so long as it makes technological sense. Any one implementation may be combined with another so long as it makes technological sense to do so.

As used in the present disclosure, an "agricultural machine" broadly includes any machine that performs basic tasks of agriculture, e.g., "tilling", "planting", and "harvesting", in fields. An agricultural machine is a machine that has a functionality and structure to perform agricultural operations such as tilling, seeding, preventive pest control, manure spreading, planting of crops, or harvesting for the ground surface within a field. Such agricultural work, tasks, or operations may be referred to as "groundwork", or simply as "work", "tasks", or "operations". Not only does a work vehicle, such as a tractor, function as an "agricultural machine" by itself alone, but an implement that is attached to or towed by a work vehicle and the work vehicle may as a whole function as one "agricultural machine". Examples of agricultural machines include tractors, vehicles for crop management, vegetable transplanters, mowers, and field-moving robots.

<Basic Configuration Example 1>

Prior to specifically describing embodiments of the present disclosure, an example of a basic configuration and operation of an agricultural machine according to the present disclosure will be described.

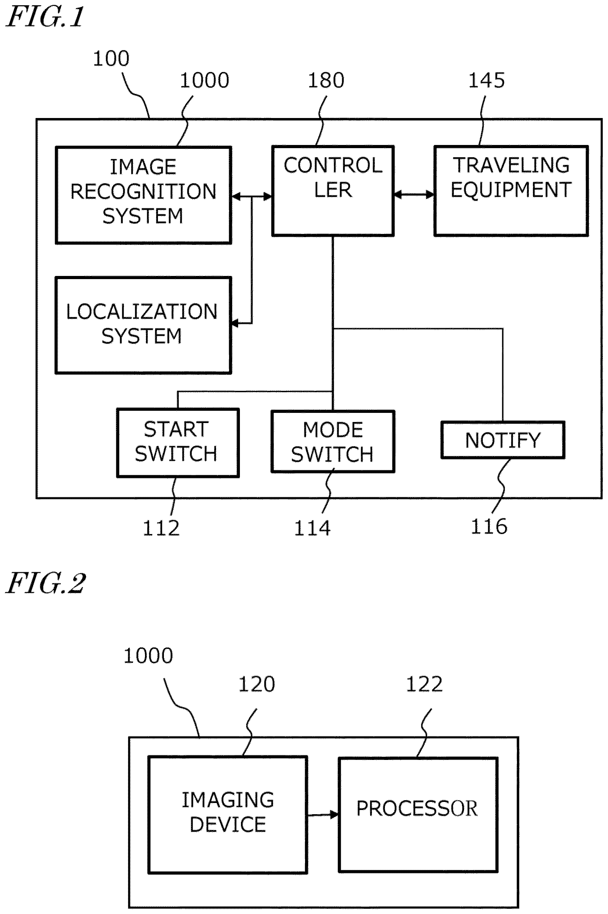

FIG. 1 is a block diagram schematically showing an example of a basic configuration of an agricultural machine according to the present disclosure. The agricultural machine **100** in this example includes an image recognition system **1000,** a positioning system **2000** that acquires the position of the agricultural machine **100** (ego-position), traveling equipment including a wheel(s) responsible for steering **145,** and a controller **180** to control the traveling equipment **145.** As shown in FIG. **2,** for example, the image recognition system **1000** includes an imaging device **120** (e.g., a camera) mounted on the agricultural machine **100** and a processing device **122** that can be implemented by at least one computer. The image recognition system **1000** is configured to detect a row region comprising at least one of a crop and a ridge that is made on a ground surface of a field from images acquired by the imaging device **120.** A method of row region detection by the image recognition system **1000** will be described later in detail. The positioning system **2000** may be a known positioning system including a GNSS receiver, for example. The controller **180** is configured to perform either one of: "automatic path travel", where the traveling equipment **145** is caused to travel along a target path based on an ego-position that is acquired by the positioning system **2000**; and "row-following travel", where the traveling equipment **145** is caused to travel along a row region that is detected by the image recognition system **1000.**

Thus, apart from traveling by usual manual steering, the agricultural machine **100** according to the present disclosure is also able to perform both of "automatic path travel" and "row-following travel". "Automatic path travel" means traveling via automatic steering so that the ego-position acquired by the positioning system **2000** moves along a target path that is set. The controller **180** controls the traveling equipment **145** so that an error between an ego-position that is obtained with the positioning system **2000** and the target path becomes small. "Row-following travel" means that the image recognition system **1000** travels along a detected row region via automatic steering. Under the row-following travel mode, the controller **180** controls the traveling equipment **145** to travel along a row region that is detected by the image recognition system **1000.** The orientation of the wheels responsible for steering during row-following travel is automatically controlled by e.g. a steering motor, without any person manipulating the steering wheel. Such row-following travel is performed by the controller **180** controlling the traveling equipment **145** so that the wheels included in the traveling equipment (i.e., all wheels, including the wheels responsible for steering) move through a region between two adjacent row regions (a work path). Therefore, during automatic path travel and row-following travel, the image recognition system **1000** is able to monitor the relationship between the position(s) of a row region(s) to be followed (e.g., the position(s) of the "edge(s)" of the row region(s)) and the wheels, with a high accuracy on the order of several centimeters.

Automatic path travel is performed by the controller **180** controlling the traveling equipment **145** so that a reference point (e.g., a centroid) of the agricultural machine **100** passes through a target path, which is an imaginary straight line or curve in a field. Therefore, position coordinates for identifying the position of the target path in the field needs to be fed to the controller **180.** For example, a target path may be defined by, in the case where the target path includes a plurality of linear portions parallel to one another, identifying the position coordinates of a start point and an end point of a linear portion that serves as a reference (reference line) and identifying the positions of a number of linear portions that lie in parallel to the reference line. The agricultural machine **100,** during automatic path travel, needs to acquire the information of its ego-position (e.g., a latitude and a longitude) in a world coordinate system. Specific examples of setting target paths will be described later.

Row-following travel is performed by the controller **180** controlling the traveling equipment **145** so that the wheels included in the traveling equipment (i.e., all wheels, including the wheels responsible for steering) move through a region between two adjacent row regions (a work path). During row-following travel, the image recognition system **1000** is able to monitor the relationship between the position(s) of a row region(s) to be followed (e.g., the position(s) of the "edge(s)" of the row region(s)) and the wheels, with a high accuracy on the order of several centimeters.

In the present disclosure, a "wheel" means a "tired wheel" or a "wheel with a track around it". Hereinafter, the term "tire" will be used to refer to the tire portion of a wheel, for example, whereas the term "metal wheel" will be used to refer to the metallic "wheel" portion, for example.

Thus, the image recognition system **1000** is configured to not only detect a row region from within an image, but also calculate the relative position of a detected row region against the agricultural machine **100** through computation, with a high accuracy. The relative position of a row region against the agricultural machine **100** may be the coordinates of the row region in a local coordinate system that is fixed to the agricultural machine **100,** for example. When performing row-following travel, the coordinates of a row region do not need to be converted into coordinates in a world coordinate system that is fixed to the ground. Therefore, the agricultural machine **100** during row-following travel does not need to accurately measure its own position in a world coordinate system (e.g., latitude and longitude). However, because the agricultural machine **100** includes the positioning system **2000,** the coordinates of a row region in a local coordinate system that is fixed to the agricultural machine **100** may be converted into coordinates in a world coordinate system that is fixed to the ground, thereby generating a map of row regions.

As shown in FIG. **1,** the agricultural machine **100** according to the present disclosure may include a start switch

112 to give a command to start auto-steering travel. More specifically, the start switch 112 gives a command to start "automatic path travel", where the traveling equipment 145 is caused to travel along a target path based on the positioning system 2000, or gives a command to start row-following travel, where the controller 180 controls the traveling equipment 145 to travel along a row region that is detected by the image recognition system 1000. In one embodiment, the agricultural machine 100 includes a mode switch 114 for selecting either travel mode of "automatic path travel" or "row-following travel". For example, after a driver (operator) of the agricultural machine 100 selects the automatic path travel mode with the mode switch 114, the operator can start automatic path travel by manipulating the start switch 112. Similarly, after the operator selects the row-following travel mode with the mode switch 114, the operator can start row-following travel by manipulating the start switch 112. Note that the mode switch 114 is not an indispensable element. In accordance with the traveling situation, etc., of the agricultural machine 100, the controller 180 may make an automatic selection of a travel mode.

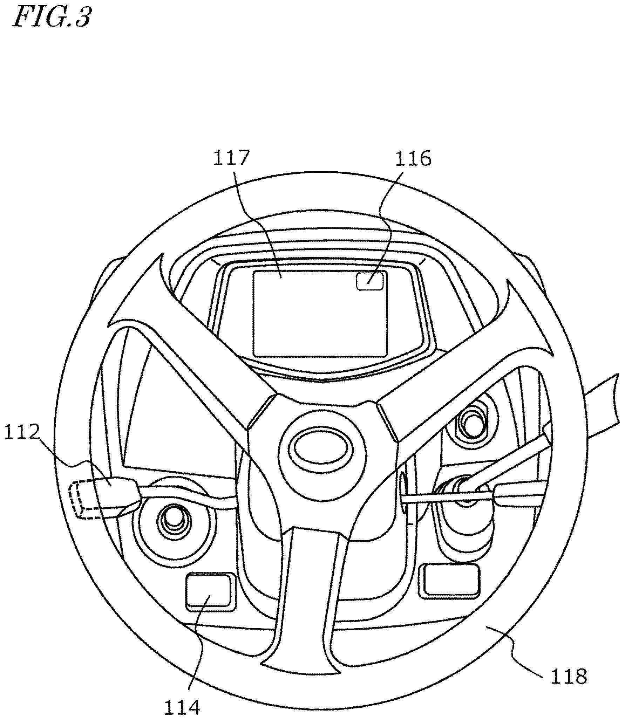

The start switch 112 may be provided near the driver's seat of the agricultural machine 100, or in the neighborhood of the steering wheel. FIG. 3 is a diagram schematically showing an example where the start switch 112 is provided in the neighborhood of the steering wheel 118 of the agricultural machine 100. In this example, the start switch 112 is a lever that is capable of shifting in upper, lower, front, and rear directions from a neutral position, for example. The start switch 112 is one of the members to be manipulated by a driver of the agricultural machine 100. Various switches to be manipulated by the driver are provided in the agricultural machine 100. In a preferable implementation, when a certain travel mode is selected and necessary conditions are satisfied, the start switch 112 functions as a switch to command that automatic steering of the wheels responsible for steering be started or ended. Then, the controller 180 may be configured to start or end automatic path travel, or start or end row-following travel, in accordance with a command from the start switch 112.

FIG. 1 is referred to again. The controller 180 is configured to determine whether row-following travel is possible or not based on a result of detection by the image recognition system 1000. When row-following travel is possible, the controller 180 starts row-following travel in response to a command to start row-following travel from the start switch 112. However, if row-following travel is not possible, even if a command to start row-following travel from the start switch 112 is given, the controller 180 does not start row-following travel.

In one implementation, if the image recognition system 1000 detects a row region and also detects a work path region having a predetermined width or greater on both sides or one side of the row region, the controller 180 determines whether the wheels responsible for steering are able to pass through the work path region or not based on the positions of the wheels responsible for steering. Then, if it is decided that the wheels responsible for steering are able to pass through the work path region, the controller 180 determines that row-following travel is possible. For example, if the detected work path region has a width which is equal to or greater than the width of the wheels responsible for steering, and the positions of the wheels responsible for steering are within the work path region, the controller 180 determines that row-following travel is possible. In doing this, it may be determined that row-following travel is possible when the orientation of the wheels responsible for steering makes an angle of a predetermined value or smaller with respect to the row region.

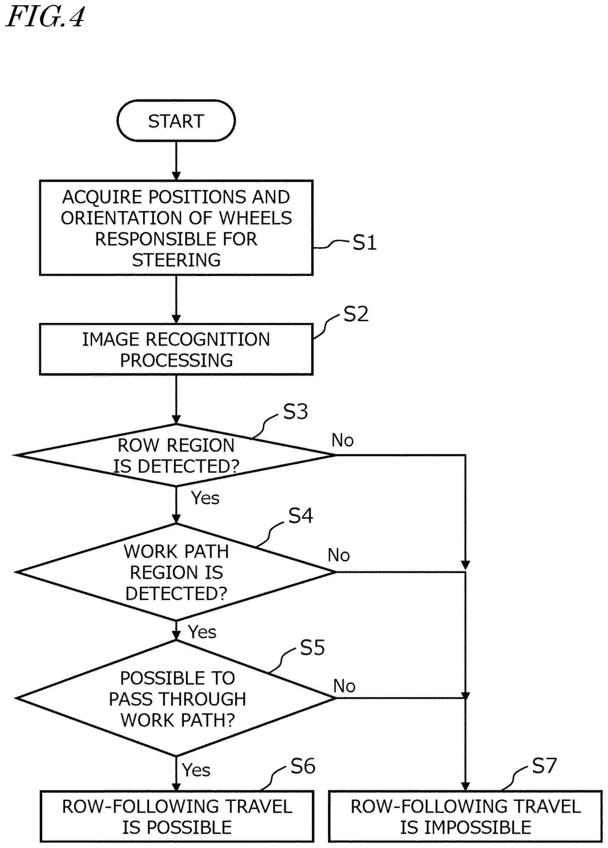

Hereinafter, with reference to FIG. 4, a procedure of the above determination will be described. FIG. 4 is a flowchart showing an example procedure of determining whether row-following travel is possible or not.

First, at step S1, the controller 180 acquires the positions and orientation of the wheels responsible for steering of the agricultural machine 100. The relative position (coordinate values in a coordinate system that is fixed to the agricultural machine 100) of the wheels responsible for steering with respect to the agricultural machine 100 may have known values which are in accordance with the model of the agricultural machine 100. In this example, the wheels responsible for steering are the right and left front wheels. The right and left rear wheels respectively move on paths that are traveled by the right and left front wheels. The operator may input the positions of wheels, including the wheels responsible for steering, to the controller 180 in advance. Measurement values of the orientation of the wheels responsible for steering may be fed from a steering angle sensor (angle-of-turn sensor) to the controller 180, for example.

At step S2, image recognition processing by the image recognition system 1000 is begun. Specifically, the controller 180 causes the image recognition system 1000 to begin image recognition processing. The image recognition processing may include finding a row region from an image that is acquired by the imaging device 120 (FIG. 2), detecting a region between adjacent row regions (work path), and performing computation to determine the relative position of a row region with respect to the agricultural machine 100 ("determining a row region"), and so on. Steps S1 and step S2, which may be performed simultaneously, may be performed in any order not limited to the example of FIG. 4.

At step S3, the image recognition system 1000 determines whether a row region has been detected or not. If a row region is detected (Yes), control proceeds to step S4; if no row region is detected (No), control proceeds to step S7. When proceeding to step S7, it is decided that row-following travel is impossible. Note that the determination as to whether row-following travel is possible or not is made by the controller 180 based on a result of detection by the image recognition system 1000.

At step S4, it is determined whether a work path region has been detected or not. If a work path region is detected (Yes), control proceeds to step **S5;** if no work path region is detected (No), control proceeds to step **S7.**

At step **S5,** based on the positions and orientation of the wheels responsible for steering, the controller **180** determines whether all wheels, including the wheels responsible for steering, are able to pass through the work path region or not. Specifically, it may be determined whether the positions of the wheels responsible for steering are located within the work path region and whether the orientation of the wheels responsible for steering matches the direction in which the work path extends or not. If it is possible to pass (Yes), control proceeds to step **S6;** if it is impossible to pass (No), control proceeds to step **S7.** When proceeding to step **S6,** it is decided that row-following travel is possible.

As mentioned earlier, if row-following travel is not possible, even if a command to start row-following travel is given from the start switch **112,** the controller **180** does not start row-following travel.

The agricultural machine **100** may include a notification means to notify the operator as to whether row-following travel is possible or not. Examples of such a notification means include a display device that displays an icon, text, or a symbol; a light emitting device such as an LED; and an acoustic device that emits a sound or vibration, such as a buzzer or a loudspeaker. For example, when row-following travel is possible, an icon, text, or a symbol indicating that "ROW-FOLLOWING TRAVEL IS POSSIBLE" may be displayed on the screen of the display device, and when row-following travel is impossible, an icon, text, or a symbol indicating that "ROW-FOLLOWING TRAVEL IS NOT POSSIBLE" may be displayed in the screen of the display device. Furthermore, when row-following travel is impossible, if the start switch **112** has been manipulated by the operator to give a command to start row-following travel, a voice that "ROW-FOLLOWING TRAVEL IS CURRENTLY NOT POSSIBLE", for example, may be issued from the acoustic device, or this text may be displayed on the display device.

In the example of FIG. **3,** a symbol indicating whether or not "row-following travel" is possible may be displayed as a notification **116** on a display device **117** that is located in the neighborhood of the steering wheel **118.**

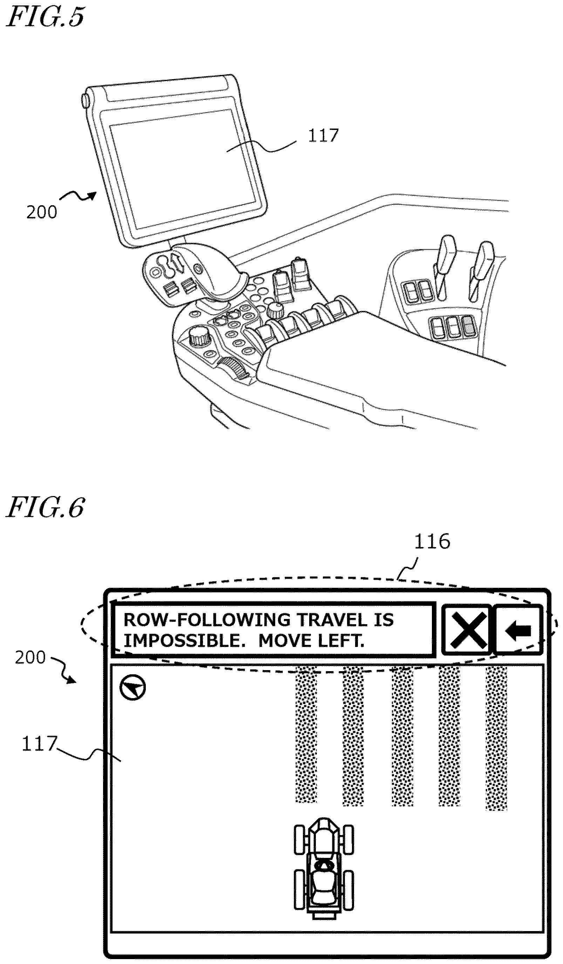

FIG. **5** is a perspective view showing an example of the display device **117.** The display device **117** may be included in an operational terminal **200** that is provided in the neighborhood of the driver's seat. On the display device **117** of this operational terminal **200,** as shown in FIG. **6,** a text, symbol, or other notification **116** indicating whether or not row-following travel is possible is displayed. In FIG. **6,** row regions being displayed on the display device **117** are schematically depicted as hatched bar regions.

As described earlier, the agricultural machine **100** may include a mode switch **114** to switch between an automatic steering mode (automatic path travel mode or row-following travel mode) and a manual steering mode (FIG. **1,** FIG. **3). When the automatic steering mode is selected with the mode switch **114,** the controller **180** is able to permit auto-steering travel to be started with the start switch **112.** Specifically, when the automatic steering mode is selected with the mode switch **114,** a steering motor for automatic steering may begin to be powered, for example. The controller **180** may be configured to, when the automatic path travel mode is selected with the mode switch **114,** start automatic path travel if the positioning system **2000** has been able to determine the ego-position determined with a reliability that is higher than a threshold. Also, the image recognition system **1000** may be configured to, when the row-following travel mode is selected with the mode switch **114,** start image recognition processing for detecting row regions. In FIG. **4,** "START" may be carried out in response to the row-following travel mode becoming selected with the mode switch **114.** The image recognition system **1000** may be configured to, when the image recognition system **1000** starts image recognition processing in response to the row-following travel mode becoming selected with the mode switch **114,** perform the image processing separately in a plurality of steps. Such processing will be described later.

In the example of FIG. **3,** the mode switch **114** is provided in the neighborhood of the steering wheel **118.** In this example, the mode switch **114** is a push button. The mode switch **114** is switched from an OFF state to a single-pressed state in order to switch from the manual steering mode to the automatic path travel mode, for example. Switching the single-pressed state is to a double-pressed state switches from the automatic path travel mode to the row-following travel mode. In order to switch from the row-following travel mode to the manual steering mode, a further press from the double-pressed state switches to an OFF state. In other words, the mode switch **114** is a switch that defines the start and the end of each steering mode. However, in a preferable embodiment of the present disclosure, the start of the automatic steering mode does not mean immediately starting row-following travel via automatic steering. In one embodiment, the controller **180** is configured to determine whether row-following travel is possible or not based on a result of detection by the image recognition system **1000,** and start row-following travel when row-following travel is selected with the mode switch **114** and if it is determined based on a result of detection by the image recognition system **1000** that row-following travel is possible. Note that the image recognition system **1000** may be configured to start detection of crops and ridges with the image recognition system **1000** when row-following travel is selected with the mode switch **114.**

The controller **180** may be configured to start automatic path travel when automatic path travel is selected with the mode switch **114** and if it is determined that automatic path travel is possible.

In one embodiment, while in the row-following travel mode and when row-following travel is possible, if the operator shifts the start switch **112** downward from the neutral position, for example, row-following travel is started. During row-following travel, if the operator shifts the start switch **112** upward from the neutral position, for example, a signal from the start switch **112** that was commanding row-following travel to be started may cease to be output, or a signal commanding that row-following travel be stopped may be output from the start switch **112**. Thus, although the start switch **112** is a switch that is capable of activating the functionality of row-following travel of the agricultural machine **100**, the controller **180** according to the present disclosure is configured not to immediately start row-following travel even if a command to start row-following travel is given from the start switch **112**. As described above, the image recognition system **1000** determines whether row-following travel is possible or not, and validates the command from the start switch **112** only when it is determined that row-following travel is possible. This process and operation prevents row-following travel from starting when row-following travel is not possible, thus making it possible to avoid crop rows or ridges from being stepped on and crushed under the wheels.

During row-following travel or automatic path travel, the traveling speed of the agricultural machine **100** may be controlled based on the position of operation members that are manipulated by the operator, e.g., an accelerator pedal and a brake pedal. However, the traveling speed of the agricultural machine **100** may also be automatically controlled by the controller **180**.

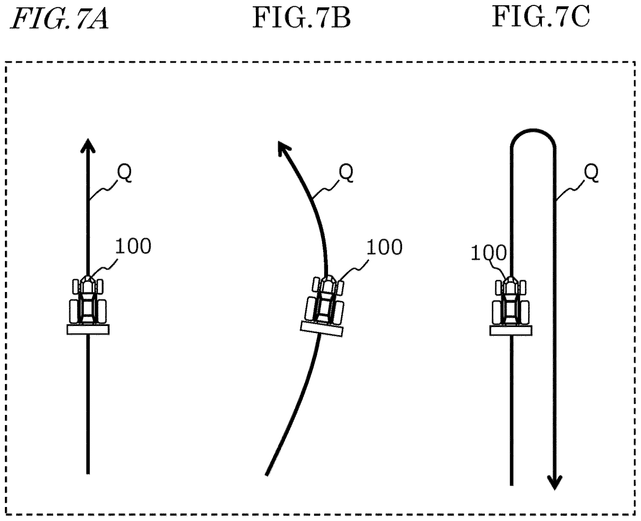

FIG. **7** is a diagram showing examples of travel by the agricultural machine **100** in the automatic path travel mode. In FIG. **7**, (a) schematically shows how the agricultural machine **100** may travel along a linear target path **Q**. In FIG. **7**, (b) schematically shows how the agricultural machine **100** may travel along a curved target path **Q**. In FIG. **7**, (c) schematically shows how the agricultural machine **100** may travel along a target path **Q** that contains two adjacent linear paths and a curved path interconnecting them. The target path **Q** is previously set, and is recorded in the storage device. When the agricultural machine **100** is traveling in the automatic path travel mode, the controller **180** repeats an operation of calculating a deviation between the position and orientation of the agricultural machine **100** as measured by the positioning system **2000** and the target path **P** and controlling the steering device so as to reduce this deviation. This causes the agricultural machine **100** to travel along the target path **Q**.

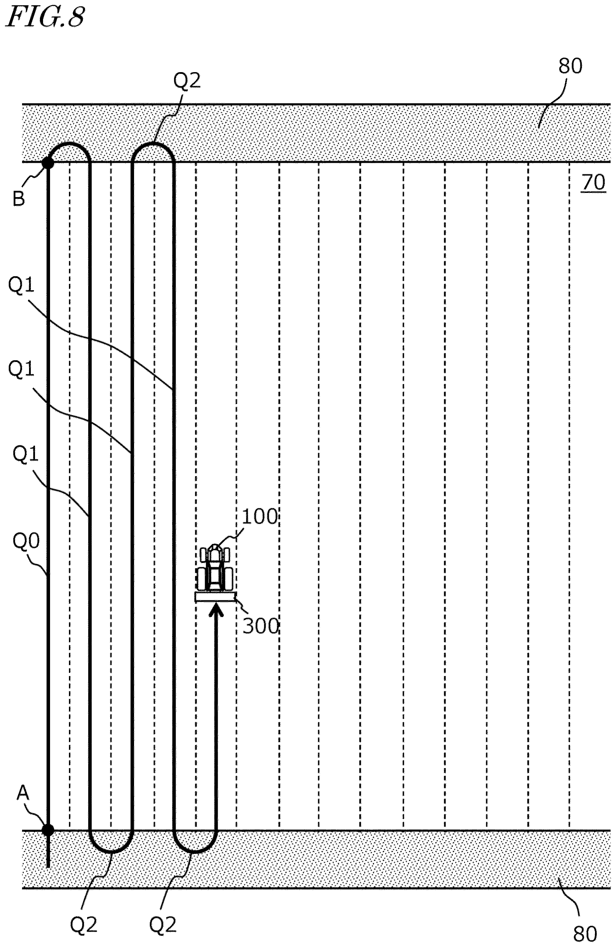

FIG. **8** is a diagram schematically showing an example of a target path of the agricultural machine **100** traveling in the field in the automatic path travel mode. In this example, the field includes a work area **70** in which the agricultural machine **100** and the implement **300** perform a task, and headlands **80** that are located near the outer peripheral edge of the field. Through a manipulation of the operational terminal **200**, the operator may designate which regions on the map of the field would correspond to the work area **70** and the headlands **80** in advance. The target path includes a plurality of parallel main paths **Q1** and a plurality of turning paths **Q2** interconnecting the plurality of main paths **Q1**. The main paths **Q1** are located in the work area **70**, whereas the turning paths **Q2** are located in the headlands **80**. Broken lines in FIG. **8** depict the working breadth of the implement **300**. The working breadth is previously set and recorded in the storage device. The working breadth may be set as the operator manipulates the operational terminal **200**, and recorded in the storage device. Alternatively, the working breadth may be automatically recognized when the implement **300** is connected to the agricultural machine **100**, and recorded to the storage device. The interval between the plurality of main paths **Q1** is matched to the working breadth. The target path, on the other hand, may be determined based on the user's manipulation, before automatic path travel driving is begun.

An example of a method of setting the target path is described. First, the operator manipulates the operational terminal **200** to register a start point **A** and an end point **B** that are located at ends (e.g., boundaries between the headlands **80** and the work area **70** of the field). For example, the operator may manually drive the agricultural machine **100** so as to cause the agricultural machine **100** to travel from the start point **A** to the end point **B**. When the agricultural machine **100** is located at the start point **A** and the end point **B,** the operator may press a registration button that is displayed on the operational terminal **200,** as a result of which the start point **A** and the end point **B** become registered. Once this manipulation has been performed, the controller **180** determines a reference line (guidance line) **Q0** extending from the start point **A** to the end point **B**. Although FIG. **8** illustrates the reference line **Q0** as a straight line, a curve may be adopted as the reference line. Based on the working breadth of the implement **300** that is previously recorded in the storage device, the controller **180** determines a plurality of main paths **Q1** that are arranged at equal intervals from the reference line **Q0,** and a plurality of turning paths **Q2** interconnecting such main paths **Q1**. As a result, the target path is determined. The target path may be determined so as to cover the entire work area **70** in the field, for example. Note that the target path may be set as the operator manipulates the operational terminal **200,** without causing the agricultural machine **100** to travel via manual driving. For example, the target path may be set at the same time as registering the work area **70** and the headlands **80**.

The traveling equipment **145** of the agricultural machine **100** according to the present disclosure is capable of manual steering travel, where the orientation of the wheels responsible for steering is changed via manual steering of the steering device. The agricultural machine **100** may further include an operation member that accepts a predetermined manipulation during manual steering travel. For example, the start switch **112** may function as such an operation member. The controller **180** may be configured to generate a reference path (reference line **Q0**) based on the position of the traveling equipment **145** at the time when this operation member accepts the predetermined manipulation, and when a command to start automatic path travel has been given, generate a target path (a plurality of main paths **Q1)** by shifting the reference path in a predetermined direction. Specifically, the position coordinates of the agricultural machine **100** at the time when the lever-shaped start switch **112** is pulled frontward may be registered as the position coordinates of the start point **A** of the reference line **Q0.** Moreover, after the agricultural machine **100** is caused to travel in a desired direction, the position coordinates of the agricultural machine **100** at the time when the start switch **112** is pulled frontward may be registered as the position coordinates of the end point **B** of the reference line **Q0.**

The controller **180** may generate the reference path for automatic path travel during row-following travel. Specifically, while the agricultural machine **100** is traveling along a row region that is detected by the image recognition system **1000,** the operator may manipulate the start switch **112** or other operation member to register the position coordinates of the start point **A** and the end point **B** of the reference line **Q0.** Note that, during row-following travel, even without the operator's manipulation, the controller **180** may set a preliminary reference line **Q0** based on the coordinates of the ego-position that is acquired by the positioning system **2000** during row-following travel. As will be described later, such a preliminary reference line **Q0** may be utilized in generating a target path after switching from row-following travel to automatic path travel, e.g., when a problem occurs in row-following travel, in accordance with the situation of the field or the traveling state of the agricultural machine **100.**

In the above-described example, the operator uses the mode switch **114** to select the travel mode under automatic steering. However, the travel mode may be selected in other ways.

The controller **180** may be configured to select either automatic path travel or row-following travel in accordance with the situation of the field. For example, while the agricultural machine **100** is performing row-following travel, if any deletion exists in the row region to be followed, it may be switched to automatic path travel. Examples of "a deletion in the row region" include any portion where the crop row is deleted because of the crop withering, etc., in a portion of the crop row, any portion where a part of the ridge is broken, any portion where the crop row or ridge is partially covered by some object. Moreover, not only where actual deletions exist in the crop row or the ridge, but also any regions that failed to be properly detected as row regions due to misrecognition by the image recognition system **1000** are also included among "deletions in the row region". Therefore, when it is said that "the image recognition system has detected a deletion in the region while operating in the row-following travel mode", it should be interpreted as encompassing a situation where "the image recognition system has lost sight of the row region". The target path in this case may have been previously set so as to follow along the crop row or ridge. Such a target path can be set by setting the aforementioned reference line (guidance line) **Q0** while traveling via manual steering or during row-following travel, for example. If during row-following travel it is detected that a plurality of row regions including the row region to be followed while the agricultural machine **100** is traveling all have a deletion (final end), this may be determined as a final end of the field. When it is determined as the final end of the field, travel may be stopped without switching from automatic path travel, or the operator may be given an advance notice of stopping of the travel from the display device or a buzzer.

The controller **180** may be configured to select either one of automatic path travel and row-following travel in accordance with the traveling state of the traveling equipment **145.** For example, row-following travel may be performed during forward travel and automatic path travel may be performed during backward travel. Alternatively, row-following travel may be performed when traveling along any path in which a crop row or a ridge is supposed to exist, and automatic path travel may be performed in any turning path **Q2** for moving into an adjacent crop row or ridge.

The controller **180** may be configured to select either one of automatic path travel and row-following travel in accordance with the status of the positioning system **2000** or the image recognition system **1000.** For example, if the quality of radio reception by the positioning system **2000** from GNSS satellites has deteriorated and resulted in a poorer reliability of positioning during automatic path travel, automatic path travel may be switched to row-following travel. During row-following travel, if a lens of the imaging device **120** becomes dirty or the image quality has deteriorated due to daylighting conditions, row-following travel may be switched to automatic path travel.

The controller **180** may be configured to correct the target path if a difference between the target path and the position of the row region as detected by the image recognition system **1000** becomes equal to or greater than a predetermined value during automatic path travel. For example, although the target path of automatic path travel is supposed to be a path that is parallel to the reference line **Q0,** positional errors of the positioning system may cause a large difference between the position of the crop row or ridge and the target path (position of the vehicle body) that is based on the position as detected by the positioning system. It may also be possible that the crop row or ridge row is shifted to right or left along the way. In such cases, a large difference exists between the position of the row region as detected by the image recognition system **1000** and the target path that is based on the position as detected by the positioning system **2000,** and when this difference becomes equal to or greater than a predetermined value, the target path may be corrected. Specifically, if the target path (position of the vehicle body) is shifted to the right from the row region by a predetermined value or more (e.g. 10 cm or more), for example, the target path is set to the left by a predetermined correction amount (e.g. 5 cm).

Furthermore, the controller **180** may be configured to acquire coordinates defining row regions that have been detected by the image recognition system **1000,** and generate a map of the row regions in the field. Specifically, by utilizing position coordinates of the agricultural machine **100** as determined based on signals from GNSS satellites, coordinates of the row regions in the world coordinate system are calculated, for example, and a map of the row regions is generated. With such a map, the image recognition system **1000** is able to estimate the ego-position on the map through matching between the row regions as determined from the images acquired with the imaging device **120** and the map.

The controller **180** may be configured to perform matching between the row regions detected by the image recognition system **1000** and the map to determine the position of the agricultural machine **100** in the field, and perform automatic path travel or row-following travel.

The controller **180** may be configured to acquire a map of row regions in the field that has been generated by another agricultural machine or any other device, for example, determine the position of the agricultural machine **100** in the field through matching between the row regions detected by image recognition system **1000** and the map, and perform automatic path travel or row-following travel.

The controller **180** may be configured to generate a target path for automatic path travel based on a map.

(Embodiment 1 of image recognition system)

First, an image recognition system according to an illustrative first embodiment of the present disclosure will be described. In the present embodiment, detection of crop rows is performed as a "row detection".

An image recognition system **1000** according to the present embodiment includes an imaging device **120** to be mounted to an agricultural machine **100** in use (FIG. **2**). The imaging device **120** is fixed to an agricultural machine **100** so as to acquire time-series color images containing at least a portion of the ground surface.

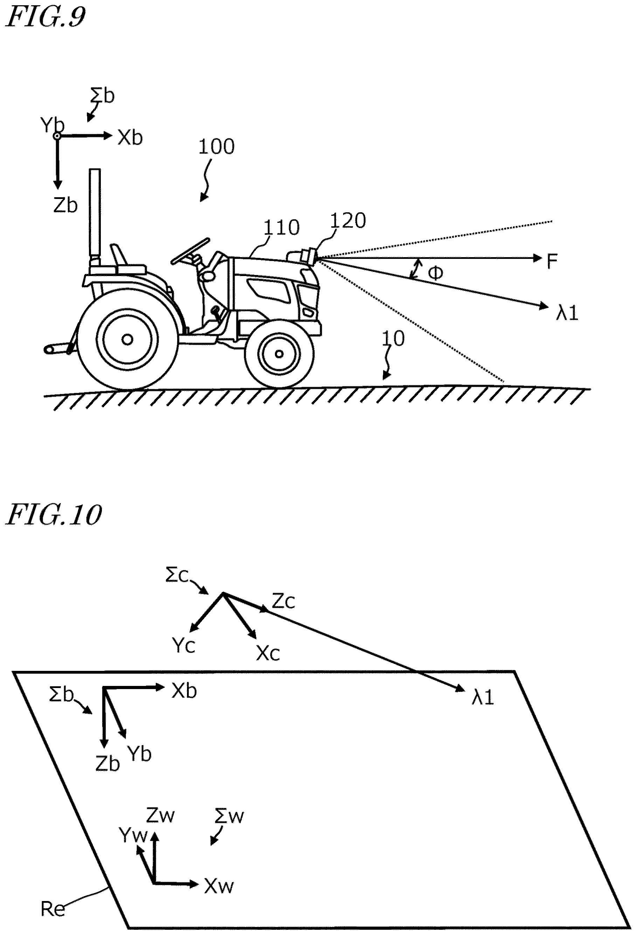

FIG. **9** schematically shows how an imaging device **12** that is mounted to an agricultural machine **100** such as a tractor or a vehicle for crop management may image the ground surface **10**, for example. In the example of FIG. **9**, the agricultural machine **100** includes a vehicle body **110** that is capable of traveling, and the imaging device **120** is fixed to the vehicle body **110**. For referencing sake, FIG. **9** shows a body coordinate system $\Sigma b$ having an Xb axis, a Yb axis, and a Zb axis that are orthogonal to one another. The body coordinate system $\Sigma b$ is a coordinate system that is fixed to the agricultural machine **100**, and the origin of the body coordinate system $\Sigma b$ may be set near the centroid of the agricultural machine **100**, for example. In the figure, for ease of viewing, the origin of the body coordinate system $\Sigma b$ is illustrated as lying external to the agricultural machine **100**. In the body coordinate system $\Sigma b$ according to the present disclosure, the Xb axis coincides with the traveling direction (direction of arrow **F**) when the agricultural machine **100** is traveling straight. When viewing from the coordinate origin in the positing direction along the Xb axis, the Yb axis coincides with the directly right direction, and the Zb axis coincides with the vertically downward direction.

The imaging device **120** is, for example, an onboard camera that includes a CCD (Charge Coupled Device) or a CMOS (Complementary Metal Oxide Semiconductor) image sensor. The imaging device **120** according to the present embodiment is a monocular camera that is capable of capturing motion pictures at a frame rate of 3 frames/second (fps: frames per second) or above, for example.

FIG. **10** is a perspective view schematically showing a relationship among the aforementioned body coordinate system $\Sigma b$, a camera coordinate system $\Sigma c$ of the imaging device **120**, and a world coordinate system $\Sigma w$ that is fixed to the ground surface **10**. The camera coordinate system $\Sigma c$ has an Xc axis, a Yc axis, and a Zc axis that are orthogonal to one another, whereas the world coordinate system $\Sigma w$ has an Xw axis, a Yw axis, and a Zw axis that are orthogonal to one another. In the example of FIG. **10**, the Xw axis and the Yw axis of the world coordinate system **Ew** are on a reference plane **Re** that expands along the ground surface **10**.

The imaging device **120** is mounted at a predetermined position of the agricultural machine **100** so as to face in a predetermined direction. Therefore, the position and orientation of the camera coordinate system $\Sigma c$ with respect to the body coordinate system $\Sigma b$ are fixed in a known state. The Zc axis of the camera coordinate system $\Sigma c$ is on the camera optical axis $\lambda 1$. In the illustrated example, the camera optical axis $\lambda 1$ is inclined from the traveling direction **F** of the agricultural machine **100** toward the ground surface **10**, with an angle of depression $\Phi$ that is greater than 0°. The traveling direction **F** of the agricultural machine **100** is schematically parallel to the ground surface **10** along which the agricultural machine **100** is traveling. The angle of depression $\Phi$ may be set to a range of e.g. not less than 0° and not more than 60°. In the case where the position at which the imaging device **120** is mounted is close to the ground surface **10**, the orientation of the camera optical axis $\lambda 1$ may be set so that the angle of depression $\Phi$ has a negative value, that is, a positive angle of elevation.

When the agricultural machine **100** is traveling on the ground surface **10**, the body coordinate system $\Sigma b$ and the camera coordinate system $\Sigma c$ translate relative to the world coordinate system $\Sigma w$. If the agricultural machine **100** rotates or swings in directions of pitch, roll, and yaw during travel, the body coordinate system $\Sigma b$ and the camera coordinate system $\Sigma c$ may rotate relative to the world coordinate system $\Sigma w$. In the following description, for simplicity, it is assumed that the agricultural machine **100** does not rotate in pitch and roll directions and that the agricultural machine **100** moves essentially parallel to the ground surface **10**.

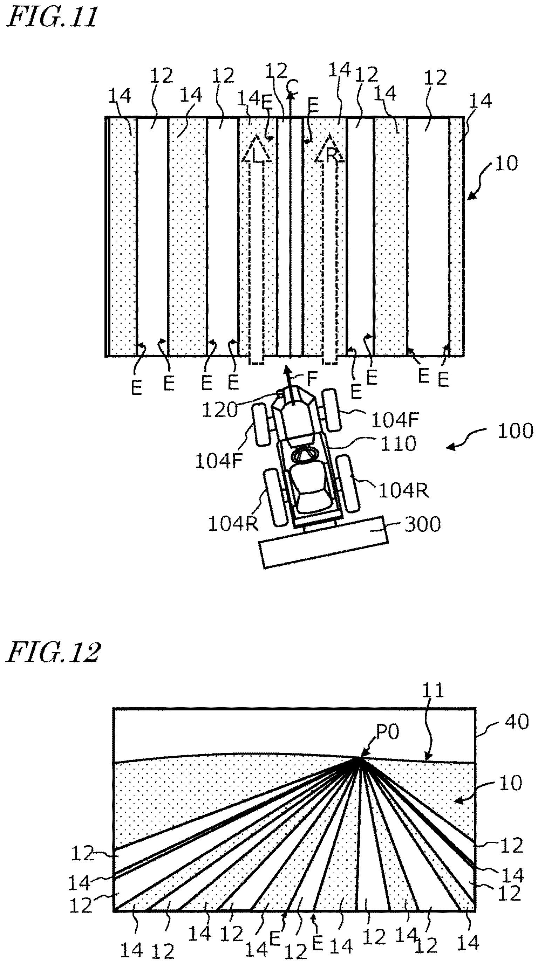

FIG. **11** is a top view schematically showing a portion of a field in which a multiple crop rows **12** are made on the ground surface **10**. A crop row **12** is a row that is formed as crops are continuously planted on the ground surface **10** of the field in one direction. In other words, a crop row **12** is an aggregation of crops that are planted in a ridge of the field. Thus, because each individual crop row **12** is a row that is created by an aggregation of crops that have been planted in the field, strictly speaking, the shape of a crop row may be complex depending on the shapes of crops and the arrangement of crops. The width of the crop row **12** changes with crop growth.

Between adjacent crop rows **12,** a belt-shaped intermediate region **14,** in which no crops have been planted, exists. In between two adjacent crop rows **12,** each intermediate region **14** is a region that is interposed between two opposing edge lines **E.** In the case where multiple crops are planted for one ridge in a width direction of the ridge, multiple crop rows **12** will be formed upon the one ridge. In other words, multiple crop rows **12** will be formed within the width of the ridge. In such a case, among the multiple crop rows **12** that are formed on the ridge, an edge line **E** of the crop row **12** that is located at an end of the width direction of the ridge serves as a delineator of an intermediate region **14.** In other words, an intermediate region **14** lies between the edge lines **E** of crop rows **12** that are located at ends of ridges along the width direction, among the edge lines **E** of multiple crop rows **12.**

Since an intermediate region **14** functions as a region (work path) through which the wheels of the agricultural machine **100** may pass, an "intermediate region" may be referred to as a "work path".

In the present disclosure, an "edge line" of a crop row means a reference line segment (which may also include a curve) for defining a target path for an agricultural machine to perform row-following travel via automatic steering. Such reference line segments may be defined as both ends of a beltlike region (work path) through which the wheels of the agricultural machine are allowed to pass. The specific method of determining the "edge lines" of a crop row will be described later.

FIG. **11** schematically depicts an agricultural machine **100** that is about to enter into a field in which crop rows **12** are made. The agricultural machine **100** includes right and left front wheels (wheels responsible for steering) **104F** and right and left rear wheels **104R** as traveling equipment **145,** and is towing an implement **300.** The front wheels **104F** are the wheels responsible for steering.

In the example of FIG. **11,** thick broken-lined arrows **L** and **R** are indicated for the respective work paths **14** that are located on opposite sides of a crop row **12** in the middle. When the agricultural machine **100** travels on a target path that is indicated by a solid-lined arrow **C,** the front wheels **104F** and the rear wheels **104R** of the agricultural machine **100** are expected to move along the arrows **L and R** in the work paths **14,** so as not to step on the crop row **12.** In the present embodiment, because the image recognition system **1000** can detect the edge lines **E** of the crop row **12** by using the imaging device **120** mounted to the agricultural machine **100,** it is possible, through the action of the controller **180** and traveling equipment **145,** to control the steering and travel of the agricultural machine **100** so that the front wheels (wheels responsible for steering) **104F** and the rear wheels **104R** will move along arrows **L** and **R** in the work paths **14.** Controlling the steering and travel of the agricultural machine **100** based on the edge lines **E** of the crop row in this manner may be referred to as "row-following control".

The agricultural machine **100** according to the present embodiment is capable of travelling in the automatic steering mode for performing row-following travel and in the usual manual steering mode. In order for the operator to switch between the automatic steering mode and the manual steering mode, the agricultural machine **100** includes the mode switch **114** shown in FIG. **1** and FIG. **3.** When performing row-following travel, the operator manipulates the mode switch **114** to select the automatic steering mode. When the automatic steering mode is selected by the mode switch **114,** the image recognition system **1000** starts image recognition processing based on an image(s) acquired by the imaging device **120.**

FIG. **12** is a diagram schematically showing an example of an image **40** that is acquired by the imaging device **120** of the agricultural machine **100** shown in FIG. **11.** Theoretically, the multiple crop rows **12** and intermediate regions (work paths) **14** extending in parallel on the ground surface **10** intersect at a vanishing point **P0** on the horizon **11.** The reason why the vanishing point **P0** is located in a right-hand region of the image **40** is that, as shown in FIG. **11,** the traveling direction **F** of the agricultural machine **100** is inclined from the direction in which the crop rows **12** extend (a direction parallel to arrow **C).**

In the present embodiment, by a method described below, it is possible to accurately detect the crop rows **12** from such an image **40** and determine edge lines **E** of the crop rows **12.** Then, based on the edge lines **E,** a path in which the agricultural machine **100** should proceed (target path) during row-following travel can be appropriately generated. As a result, through automatic steering, it becomes possible to control the travel of the agricultural machine **100** so that the front wheels **104F** and the rear wheels **104R** of the agricultural machine **100** will move along arrows **L** and **R** within the work paths **14** (row-following control). Through such row-following control, a precise automatic steering that is adapted to the state of growth of crops can be achieved which cannot be attained by automatic steering techniques that utilize GNSS or other positioning systems.

However, as shown in FIG. **11,** when the orientation of the agricultural machine **100** does not match the direction in which the work path **14** extends, it may be impossible for the front wheels **104F** and the rear wheels **104R** of the agricultural machine **100** to move in the work path **14** along arrows **L** and **R** via automatic steering. As described earlier, the image recognition system **1000** relies on the positions and orientation of the wheels responsible for steering (front wheels **104F)** to determine whether row-following travel is possible or not. If the image recognition system **1000** determines that row-following travel is impossible, the operator is so notified. Based on the notification, the operator adjusts the position and/or orientation of the agricultural machine **100** via manual steering.

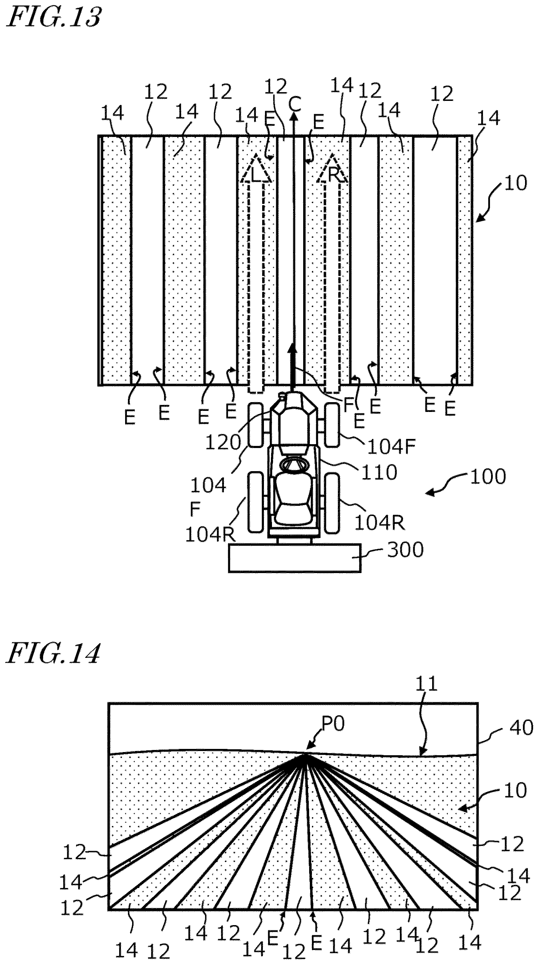

FIG. **13** is a top view schematically showing a state where the agricultural machine **100** is steered to reduce the positional error with respect to a target path (arrow **C**), thereby adjusting the position and orientation (angle in yaw directions) of the agricultural machine **100**. FIG. **14** is a diagram showing an example of an image **40** acquired by the imaging device **120** of the agricultural machine **100** in such a state. The front wheels **104F** and the rear wheels **104R** of the agricultural machine **100** in the state of FIG. **13** are respectively located on lines in work paths **14** indicated by arrow **L** and arrow **R**. When the agricultural machine **100** travels along a target path **C** indicated by central arrow **C**, the automatic steering device in the agricultural machine **100** controls the steering angles of the wheels responsible for steering so that the front wheels **104F** and the rear wheels **104R** will not mistrack from the work paths **14**.

After the image recognition system **1000** determines that row-following travel is impossible, if the state of the agricultural machine **100** changes to that shown in FIG. **13** through manual steering by the operator, for example, the image recognition system **1000** may determine that row-following travel is possible, and give this notification the operator. In the present embodiment, after the notification, automatic steering is not begun until the operator commands that row-following travel be started with the start switch **112** in FIG. **1**. If in this state the operator manipulates the start switch **112** to issue a command to start row-following travel, the controller **180** permits row-following travel through automatic steering to be started.

When row-following travel through automatic steering is started and the agricultural machine **100** travels along a target path **C** indicated by central arrow **C** in FIG. **13**, the controller **180** and the traveling equipment **145** in the agricultural machine **100** controls the steering angles of the wheels responsible for steering so that the front wheels **104F** and the rear wheels **104R** will not mistrack from the work paths **14**.

Hereinafter, the configuration and operation of an image recognition system according to an embodiment of the present disclosure will be described in detail.

As shown in FIG. **2**, an image recognition system **1000** according to the present embodiment includes: the aforementioned imaging device **120**; and a processing device **122** which performs image processing for time-series color images that are acquired from the imaging device **120**. The processing device **122** is connected to the controller **180** that is included in the agricultural machine **100**.

The processing device **122** in FIG. **2** can be implemented by an electronic control unit (ECU) for image recognition. The ECU is a computer for onboard use. The processing device **122** is connected to the imaging device **120** via serial signal lines, e.g., a wire harness, so as to receive image data that is output from the imaging device **120**. A portion of the image recognition processing that is performed by the processing device **122** may be performed inside the imaging device **120** (inside a camera module).

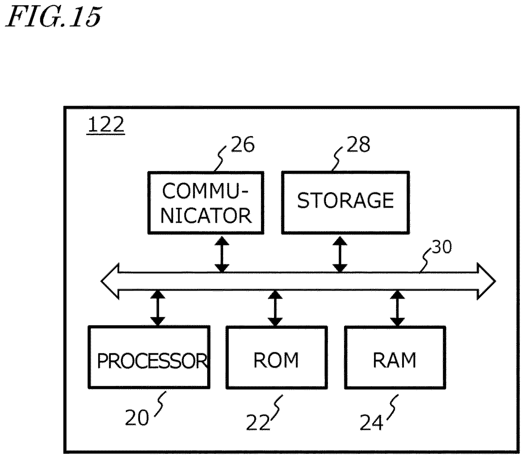

FIG. **15** is a block diagram showing an example hardware configuration of the processing device **122**. The processing device **122** includes a processor **20**, a ROM (Read Only Memory) **22**, a RAM (Random Access Memory) **24**, a communicator **26**, and a storage device **28**. These component elements are connected to one another via buses **30**.

The processor **20** is a semiconductor integrated circuit, and referred to also as a central processing unit (CPU) or a microprocessor. The processor **20** may include an image processing unit (GPU). The processor **20** consecutively executes a computer program describing predetermined instructions, which is stored in the ROM **22**, to realize processing that is needed for the row detection according to the present disclosure. A whole or a part of the processor **20** may be an FPGA (Field Programmable Gate Array), an ASIC (Application Specific Integrated Circuit), or an ASSP (Application Specific Standard Product) in which a CPU is mounted.

The communicator **26** is an interface for performing data communication between the processing device **122** and an external computer. The communicator **26** can perform wired communication based on a CAN (Controller Area Network) or the like, or wireless communication complying with the Bluetooth (registered trademark) standards and/or the Wi-Fi (registered trademark) standards.

The storage device **28** is able to store data of images acquired from the imaging device **120** or images which are under processing. Examples of the storage device **28** include a hard disk drive and a non-volatile semiconductor memory.

The hardware configuration of the processing device **122** is not limited to the above examples. A whole or a part of the processing device **122** does not need to be mounted on the agricultural machine **100**. By utilizing the communicator **26**, one or more computers located outside the agricultural machine **100** may be allowed to function as a whole or a part of the processing device **122**. For example, a server computer that is connected to a network may function as a whole or a part of the processing device **122**. On the other hand, a computer mounted in the agricultural machine **100** may perform all functions that are required of the processing device **122**.

In the present embodiment, such a processing device **122** acquires time-series color images from the imaging device **120**, and performs operations S1, S2 and S3 below.

(S1) from time-series color images, generate an enhanced image in which the color of a crop row for detection is enhanced.

(S2) from the enhanced image, generate a plan view image as viewed from above the ground surface, the plan view image being classified into first pixels of which a color index value for the crop row is equal to or greater than a threshold and second pixels of which this index value is below the threshold.

(S3) based on the index values of the first pixels, determine the positions of edge lines of the crop row.

Hereinafter, specific examples of operations S1, S2 and S3 will be described in detail.

The time-series color images are an aggregation of images that are chronologically acquired by the imaging device **120** through imaging. Each image is composed of a frame-by-frame group of pixels. For example, when the imaging device **120** outputs images at a frame rate of 30 frames/second, the processing device **122** is able to acquire new images with a period of about 33 milliseconds. As compared to the speed of a common automobile that travels on public roads, the agricultural machine **100,** such as a tractor, travels in a field at a speed which is relatively low, e.g., about 10 kilometers per hour or lower. In the case of 10 kilometers per hour, a distance of about 6 centimeters is travelled in about 33 milliseconds. Therefore, the processing device **122** may acquire images with a period of e.g. about 100 to 300 milliseconds, and does not need to process every frame of image captured by the imaging device **120.** The period with which images to be processed by the processing device **122** are acquired may be automatically changed by the processing device **122** in accordance with the traveling speed of the agricultural machine **100.**

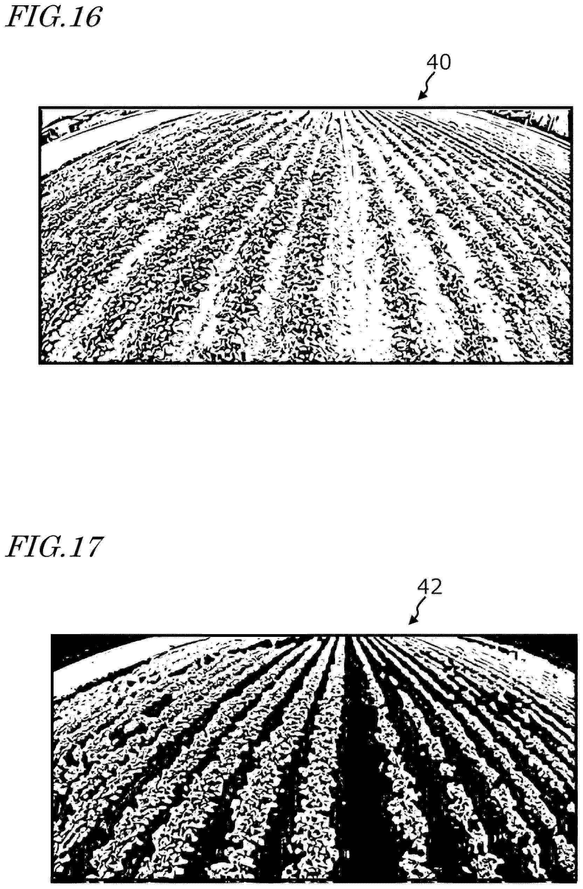

FIG. **16** is an image corresponding to one frame of image **40,** among time-series color images that have been acquired by an imaging device mounted on the agricultural machine (which in this example is a monocular camera). Rows of crops (crop rows) appear in the image of FIG. **16,** which are planted in the form of rows on the ground surface of a field. In this example, the rows of crops are arranged essentially in parallel and at equal intervals on the ground surface, such that the camera optical axis of the imaging device is in the traveling direction of the agricultural machine. As described earlier, the camera optical axis does not need to be parallel to the traveling direction of the agricultural machine, but may meet the ground surface frontward of the traveling direction of the agricultural machine. The mounted position of the imaging device is not limited to this example. In the case where a plurality of imaging devices are mounted to the agricultural machine, some of the imaging device may have their camera optical axes oriented in an opposite direction to the traveling direction, or in a direction intersecting the traveling direction.

In operation S1, based on time-series color images that have been acquired from the imaging device **120,** the processing device **122** in FIG. **2** generates an image (enhanced image) in which the color of a crop row for detection is enhanced. Crops perform photosynthesis with sunlight (white light), and therefore contain chlorophyll. Chlorophyll has a lower optical absorption rate for green than for red or blue. Therefore, the spectrum of sunlight that is reflected by a crop shows a relatively high value in the green wavelength range, as compared to the spectrum of sunlight that is reflected from the soil surface. As a result, the crop color generally contains plenty of green components, and thus a typical example of the "color of the crop row" is green. However, as will be described below, the "color of the crop row" is not limited to green.

The image sensor in the imaging device **120** includes a multitude of photodetection cells that are arranged in rows and columns. Each individual photodetection cell corresponds to one of the pixels that constitute an image, and includes an R subpixel to detect the intensity of red light, a G subpixel to detect the intensity of green light, and a B subpixel to detect the intensity of blue light. The light outputs to be detected by the R subpixel, the G subpixel, and the B subpixel of each photodetection cell may be referred to as an R value, a G value, and a B value, respectively. Hereinafter, an R value, a G value, and a B value may be collectively referred to as "pixel values" or "RGB values". By using an R value, a G value, and a B value, it is possible to define a color based on coordinate values within an RGB color space.

In the case where the color of a crop row for detection is green, an enhanced image in which the color of a crop row is enhanced is an image resulting from: converting the RGB values of each pixel of a color image acquired by the imaging device into pixel values having a relatively large weight on the G value. Such pixel value conversion for generating an enhanced image may be defined as "($2\times$G value-R value-B value)/(R value+G value +B value)", for example. Herein, the (R value+G value +B value) in the denominator is a factor for normalization. Hereinafter, normalized RGB values will be referred to as rgb values, which are defined as: r=R value/(R value+G value+B value); g=G value/(R value+G value +B value); and b=B value/(R value+G value +B value). Note that "$2\times$g-r-b" is called an excess green index (ExG: Excess Green Index).

FIG. **17** is a diagram showing an enhanced image **42** resulting from converting the RGB values of the image of FIG. **16** into "$2\times$g-r-b". Through this conversion, in the image **42** of FIG. **17,** any pixel whose "r+b" is smaller than g is displayed brighter, and any pixel whose "r+b" is larger than g is displayed darker. Through this conversion, an image (enhanced image) **42** in which the color of a crop row for detection (i.e., "green" in this example) is enhanced is obtained. Any pixel which is relatively bright in the image of FIG. **17** is a pixel having a relatively large green component, and belongs to the crop region.

As the "color index value" regarding which the color of the crop is to be enhanced, any index other than the excess green index (ExG) may also be used, e.g., a green red vegetation index (G value-R value)/(G value +R value).

In the case where the imaging device can also function as an infrared camera, NDVI (Normalized Difference Vegetation Index) may be used as the "color index value for the crop row".

There may be cases where each crop row is covered by a sheet called "mulch" (mulching sheet). In such cases, the "color of the crop row" is the "color of objects that are arranged in rows covering the crops". Specifically, when the sheet color is black, which is an achromatic color, the "color of the crop row" means "black". When the sheet color is red, the "color of the crop row" means "red". Thus, the "color of the crop row" may mean not only the color of the crops themselves, but also the color of the region defining the crop row (i.e., a color that is distinguishable from the color of the soil surface).

The generation of an enhanced image in which the "color of the crop row" is enhanced may utilize conversion from an RGB color space into an HSV color space. An HSV color space is a color space that is constituted by the three components of hue, saturation, and value. Using color information obtained by converting from an RGB color space into an HSV color space makes it possible to detect a "color" with low saturation, such as black or white. In the case of utilizing an OpenCV library to detect "black", the hue may be set to the maximum range (0-179), the saturation may be set to the maximum range (0-255), and the value range may be set to 0-30. In order to detect "white", the hue may be set to the maximum range (0-179), the saturation may be set to the maximum range (0-255), and the value range may be set to 200-255. Any pixel that has a hue, a saturation, and a value falling within such setting ranges is a pixel having the color to be detected. In the case of detecting a green pixel, for example, the hue range may be set to a range of e.g. 30-90.

Generating an image in which the color of a crop row for detection is enhanced (enhanced image) makes it easy to distinguish (i.e., extract) crop row regions from the remaining background regions (segmentation).

Next, operation S2 will be described.

In operation S2, from the enhanced image 42, the processing device 122 generates a plan view image being classified into first pixels of which a color index value for the crop row is equal to or greater than a threshold and second pixels of which this index value is below the threshold. The plan view image is an image as viewed from above the ground surface.

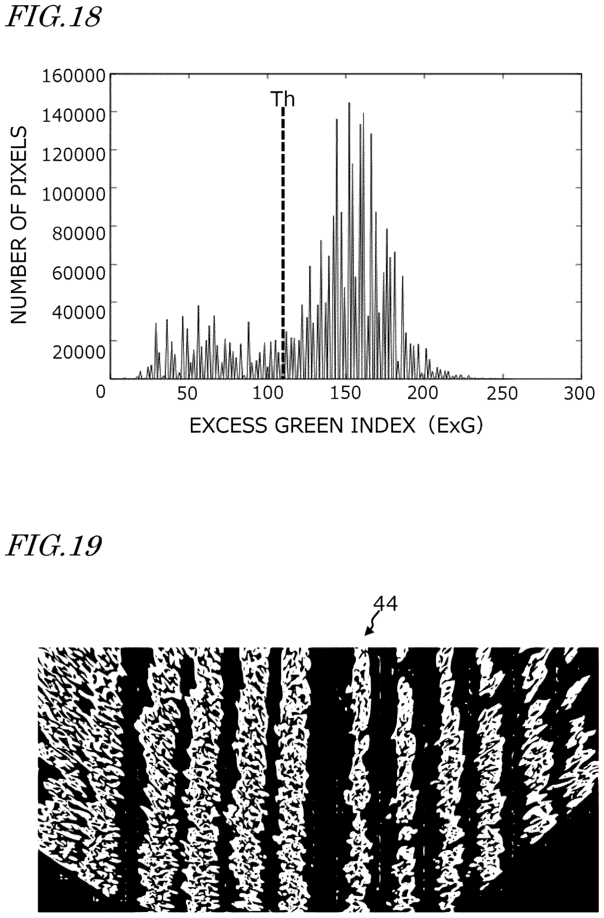

In the present embodiment, as a color index value for the crop row, the aforementioned excess green index (ExG) is adopted, and a discriminant analysis method (Otsu's binarization) is used to determine a discrimination threshold. FIG. 18 is a histogram of an excess green index (ExG) in the enhanced image 42 of FIG. 17. In the histogram, the horizontal axis represents the excess green index (ExG), and the vertical axis represents the number of pixels in the image (corresponding to frequency of occurrence). In FIG. 18, a broken line is shown indicating a threshold Th that is calculated by the discriminant analysis algorithm. Against this threshold Th, the pixels in the enhanced image 42 are classified into two class. The right side of the broken line indicating the threshold Th shows the frequency of occurrence of pixel whose excess green index (ExG) is equal to or greater than the threshold, these pixels being estimated as belonging to a crop class. On the other hand, the left side of the broken line indicating the threshold Th shows the frequency of occurrence of pixels whose excess green index (ExG) is below the threshold, these pixels being estimated as belonging to a non-crop class, e.g., the soil. In this example, the first pixels, i.e., the pixels whose index value is equal to or greater than the threshold, correspond to "crop pixels". On the other hand, the second pixels, whose index value is below the threshold, correspond to "background pixels". The background pixels correspond to objects other than those for detection, e.g., the soil surface, and the aforementioned intermediate regions (work paths) 14 may be constituted by background pixels. Note that the method of threshold determination is not limited to the above examples; for example, other methods utilizing machine learning may be used to determine the threshold.

By assigning each of the pixels constituting the enhanced image 42 as either a "first pixel" or a "second pixel", it becomes possible to extract a region for detection from the enhanced image 42. Also, by giving "zero" to the pixel value of any "second pixel", or removing the second pixel data from the image data, it becomes possible to mask any region other than the regions for detection. When finalizing the regions to be masked, it may be possible to perform a process of including any pixel whose excess green index (ExG) exhibits a locally high value, as a noise, into the masked regions.

FIG. 19 is a diagram showing an example of a plan view image 44 being classified into first pixels and second pixels, as viewed from above the ground surface. The plan view image 44 of FIG. 19 is an image that is generated from the enhanced image 42 of FIG. 17 by an image transformation technique described below. In the plan view image 44, the second pixels whose color index value for the crop row (which in this example is the excess green index) is below the threshold Th are black pixels (pixels whose value is set to zero). The regions which are constituted by second pixels are mainly regions where the surface of the soil on the ground surface is visible. In the plan view image 44 of FIG. 19, black triangular regions exist at right and left corners which are tangent to the bottom side. These triangular regions correspond to regions which do not appear in the enhanced image 42 of FIG. 17. Note that, in the image 40 of FIG. 16 and the enhanced image 42 of FIG. 17, a phenomenon where lines that would actually be straight lines are distorted in peripheral portions of the image is observed. Such image distortion is ascribable to the performance of the camera lenses, and may be corrected by using internal parameters of the camera. Processes such as enhancement of the crop regions, masking, and distortion correction may be referred to as preprocessing. The preprocessing may also include processes other than these processes.

The plan view image **44** of FIG. **19** is an overhead view image in which a reference plane **Re** that is parallel to the ground surface is viewed directly from above along the normal direction of the reference plane **Re.** This overhead view image can be generated from the enhanced image **42** of FIG. **17** through homography transformation (planar perspective projection). Homography transformation is a kind of geometric transformation where a point that is on a given plane in a three-dimensional space can be converted to a point that is on another arbitrary plane.

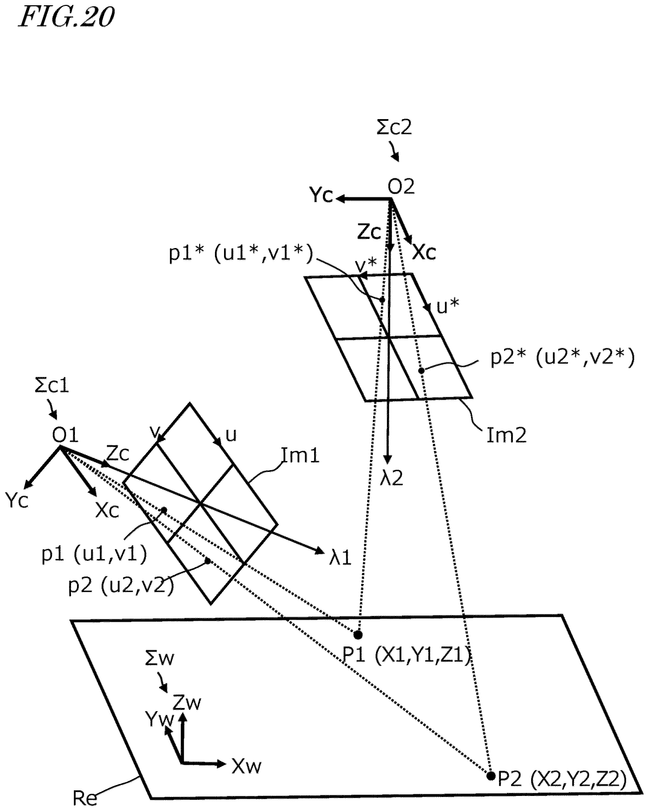

FIG. **20** is a perspective view schematically showing the relative locations between: each of a camera coordinate system $\Sigma c1$ of an imaging device that has a first pose (position and orientation) and a camera coordinate system $\Sigma c2$ of an imaging device that has a second pose; and the reference plane **Re.** In the illustrated example, the camera coordinate system $\Sigma c1$ is inclined so that its Zc axis obliquely intersects the reference plane **Re.** An imaging device having the first pose corresponds to an imaging device that is mounted to the agricultural machine. On the other hand, the camera coordinate system $\Sigma c2$ has its Zc axis lying orthogonal to the reference plane **Re.** Stated otherwise, the camera coordinate system $\Sigma c2$ is placed in a state that allows for acquiring an overhead view image in which the reference plane **Re** is viewed directly from above along the normal direction of the reference plane **Re.**

At a position that is distant from an origin **O1** of the camera coordinate system $\Sigma c1$ by the focal length of the camera along the Zc axis, an imaginary image plane **Im1** exists. The image plane **Im1** is orthogonal to the Zc axis and the camera optical axis $\lambda$**1.** A pixel position on the image plane **Im1** is defined by an image coordinate system having a u axis and a v axis that are orthogonal to each other. For example, a point **P1** and a point **P2** located on the reference plane **Re** may have coordinates (X1,Y1,Z1) and (X2,Y2,Z2) in the world coordinate system $\Sigma w$, respectively. In the example of FIG. **20**, the Xw axis and the Yw axis of the world coordinate system $\Sigma w$ are on the reference plane **Re.** Therefore, Z1=Z2=0. The reference plane **Re** is set so as to expand along the ground surface.

Through perspective projection based on a pinhole camera model, the point **P1** and the point **P2** on the reference plane **Re** are converted, respectively, into a point **p1** and a point **p2** on the image plane **Im1** of the imaging device having the first pose. On the image plane **Im1**, the point **p1** and the point **p2** are at pixel positions indicated by coordinates (u1,v1) and (u2,v2), respectively.

When the imaging device has the second pose, an imaginary image plane **Im2** exists at a position that is distant from an origin **O2** of the camera coordinate system $\Sigma c2$ by the focal length of the camera along the Zc axis. In this example, the image plane **Im2** is parallel to the reference plane **Re.** A pixel position on the image plane **Im2** is defined by an image coordinate system having a u* axis and a v* axis that are orthogonal to each other. Through perspective projection, a point **P1** and a point **P2** on the reference plane **Re** are converted, respectively, into a point **p1\*** and a point **p2\*** on the image plane **Im2.** On the image plane **Im2**, the point **p1\*** and point **p2\*** are at pixel positions indicated by coordinates (u1\*,v1\*) and (u2\*,v2\*), respectively.

Once the relative locations of the camera coordinate systems $\Sigma c1$ and $\Sigma c2$ with respect to the reference plane **Re** (world coordinate system $\Sigma w$) are given, then, for a given point (u,v) on the image plane **Im1**, it is possible to determine a corresponding point (u*,v*) on the image plane **Im2** through homography transformation. When point coordinates are expressed by a homogeneous coordinate system, such homography transformation is defined by a transformation matrix H of 3 rows $\times$ 3 columns.

[eq. 1]

$$\begin{pmatrix} u* \\ v* \\ 1 \end{pmatrix} = H \begin{pmatrix} u \\ v \\ 1 \end{pmatrix}$$

The content of the transformation matrix H is defined by numerical values of hn, $h_{12}$,..., $h_{32}$, as indicated below.

[eq. 2]

$$\begin{pmatrix} u* \\ v* \\ 1 \end{pmatrix} = \begin{pmatrix} h11 & h12 & h13 \\ h21 & h22 & h23 \\ h31 & h32 & 1 \end{pmatrix} \begin{pmatrix} u \\ v \\ 1 \end{pmatrix}$$

The eight numerical values ($h_{11}$, $h_{12}$,..., $h_{32}$) can be calculated by a known algorithm once a calibration board that is placed on the reference plane **Re** is imaged by the imaging device **120** mounted to the agricultural machine **100**.

When a point on the reference plane **Re** has coordinates (X,Y,0), the coordinates of the corresponding points on the respective camera image planes **Im1** and **Im2** are associated with the point (X,Y,0) by respective homography transformation matrices H1 and H2, as indicated by the formulae of eq. 3 and eq. 4 below.

[eq. 3]

$$\begin{pmatrix} u \\ v \\ 1 \end{pmatrix} = H1 \begin{pmatrix} X \\ Y \\ 1 \end{pmatrix}$$

[eq. 4]

$$\begin{pmatrix} u* \\ v* \\ 1 \end{pmatrix} = H2 \begin{pmatrix} X \\ Y \\ 1 \end{pmatrix}$$

From the above two formulae, the following formula is derived. As is clear from this formula, the transformation matrix H is equal to H2H1$^{-1}$. H1$^{-1}$ is an inverse of H1.

[eq. 5]

$$\begin{pmatrix} u* \\ v* \\ 1 \end{pmatrix} = H2H1^{-1} \begin{pmatrix} u \\ v \\ 1 \end{pmatrix}$$

The content of the transformation matrices H1 and H2 depends on the reference plane **Re**; therefore, if the position of the reference plane **Re** changes, the content of the transformation matrix H also changes.

By utilizing such homography transformation, a plan view image of the ground surface can be generated from an image of the ground surface acquired by the imaging device having the first pose (imaging device mounted to the agricultural machine). In other words, through homography transformation, coordinates of a given point on the image plane **Im1** of the imaging device **120** can be converted into coordinates of a point that is on the image plane **Im2** of an imaginary imaging device having a predetermined pose with respect to the reference plane **Re.**

After calculating the content of the transformation matrix H, the processing device **122** executes a software program based on the aforementioned algorithm to generate, from time-series color images or preprocessed images of time-series color images, overhead view images in which the ground surface **10** is viewed from above.

In the above description, it is assumed that points (e.g., **P1**, **P2**) in a three-dimensional space are all located on the reference plane **Re** (e.g., Z1=Z2=0). In the case where the height of a crop with respect to the reference plane **Re** is non-zero, in the plan view image resulting after homography transformation, the position of a corresponding point will be shifted from its proper position. In order to suppress an increase in the amount of shift, it is desirable that the height of the reference plane **Re** is close to the height of the crop for detection. Bumps and dents, e.g., ridges, furrows, or trenches, may exist on the ground surface **10**. In such cases, the reference plane **Re** may be offset upward from the bottoms of such bumps and dents. The offset distance may be appropriately set depending on the bumps and dents of the ground surface **10** on which crops are planted.

While the agricultural machine **100** is traveling on the ground surface **10**, if the vehicle body **110** (see FIG. **9**) undergoes a roll or pitch motion, the pose of the imaging device **120** changes, whereby the content of the transformation matrix H1 may change. In such a case, angles of rotation of roll and pitch of the vehicle body **110** may be measured with an IMU, and the transformation matrix H1 and the transformation matrix H can be corrected in accordance with the changes in the pose of the imaging device.

By the above-described method, the processing device **122** according to the present embodiment generates a plan view image as viewed from above the ground surface, the plan view image being classified into first pixels of which a color index value for the crop row is equal to or greater than a threshold and second pixels of which this index value is below the threshold; thereafter, the processing device **122** performs operation S3.

Next, operation S3 will be described.

In operation S3, based on the index values of the first pixels, the processing device **122** determines the positions of the edge lines of the crop row. Specifically, the index values of the first pixels (i.e., pixels whose color index value is equal to or greater than a threshold) are totaled along a plurality of scanning lines in the plan view image.

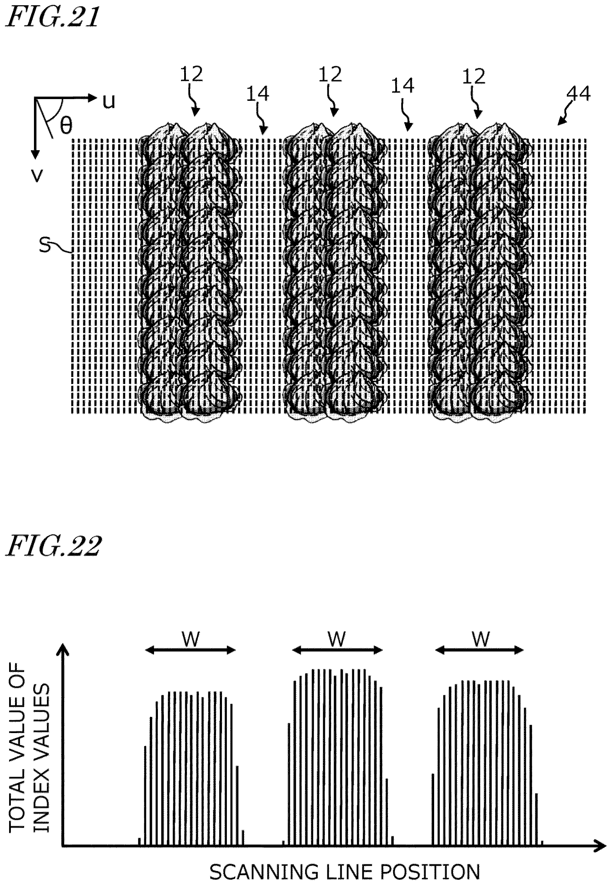

FIG. **21** is an example of a plan view image **44** in which three crop rows **12** appear. In this example, the directions of the crop rows **12** are parallel to the vertical direction in the image (v axis direction). FIG. **21** shows a multitude of scanning lines (broken line) **S** that are parallel to the vertical direction in the image (v axis direction). The processing device **122** totals the index values of pixels that are located on the plurality of scanning lines **S** to obtain a total value for each scanning line **S.**

FIG. **22** is a diagram schematically showing a relationship between positions of scanning lines **S** and total values of index values (histogram of total values), as obtained with respect to the plan view image of FIG. **21.** In FIG. **22**, the horizontal axis represents the positions of scanning lines **S** along the horizontal direction in the image (u axis direction) . In the plan view image **44**, when many of the pixels that are crossed by a scanning line **S** are first pixels belonging to a crop row **12**, that scanning line **S** has a large total value. On the other hand, when many of the pixels that are crossed by a scanning line **S** are second pixels (background pixels) belonging to an intermediate region (work path) **14** existing between crop rows **12**, that scanning line **S** has a small total value. Note that, in the present embodiment, the intermediate regions (work paths) **14** are masked, so that the second pixels have an index value of zero.

In the histogram of FIG. **22**, there exist: concave regions whose total value is zero or near-zero; and convex regions that are distinguished by such concave regions. The concave regions correspond to intermediate regions (work paths) **14**, whereas the convex regions correspond to crop rows **12**. In the present embodiment, the positions of scanning lines **S** having total values at predetermined positions on opposite sides of a peak of total values within a convex region, specifically, those which accounts for a predetermined rate (e.g., a value chosen in a range from 60% to 90%) with respect to the peak of total values, are determined as the positions of edge lines of a crop row **12**. Both ends of an arrow **W** in FIG. **22** indicate the positions of edge lines of each crop row **12**. In the example of FIG. **22**, the positions of the edge lines of each crop row **12** are positions of scanning lines **S** having a 80% value of a peak of total values of the crop row **12**.

In the present embodiment, the second pixels are masked before color index values for the crop row is totaled upon each scanning line **S.** In other words, it is not that the number of first pixels (number of pixels) is counted in a plan view image that has been binarized based on a classification between first pixels and second pixels. In the case where the number of first pixels is counted, if a multitude of pixels (classified as first pixels) that slightly exceed the threshold Th due to fallen leaves and weeds or the like exist, for example, the count value of first pixels will increase. On the other hand, as in the embodiment of the present disclosure, totaling color index values for the crop row with respect to first pixels, rather than relying on the number of first pixels, suppresses misjudgments associated with fallen leaves or weeds, thus enhancing the robustness of row detection.

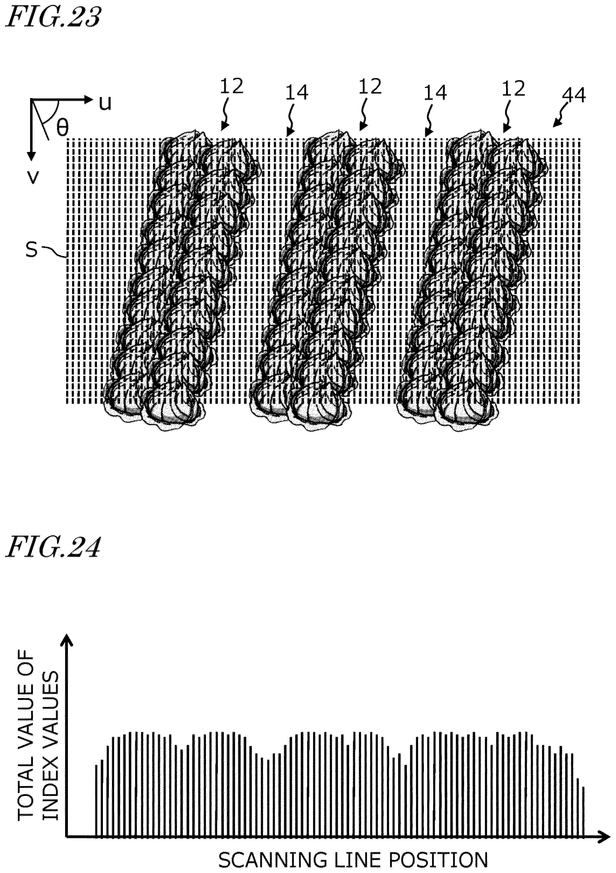

FIG. **23** shows an example of a plan view image **44** in which crop rows **12** extend obliquely. As has been described with reference to FIG. **11** and FIG. **12**, depending on the orientation of the agricultural machine **100**, the crop rows **12** may extend in directions that are inclined right or left in the image **40** acquired by the imaging device **120.** If the plan view image **44** is generated from such an image through homography transformation, as in the example of FIG. **23**, the direction of the crop rows **12** will be inclined from the vertical direction in the image (v axis direction).

FIG. **23** also shows a multitude of scanning lines (broken line) **S** that are parallel to the vertical direction in the image (v axis direction). When the processing device **122** totals the index values of pixels that are located on such a plurality of scanning lines **S** to obtain a total value for each scanning line **S**, a histogram of total values as shown in FIG. **24** may result. FIG. **24** is a diagram schematically showing a relationship between positions of scanning lines **S** and total values of index values, as obtained with respect to the plan view image of FIG. **23.** From this histogram, edge lines of the crop rows **12** cannot be determined.

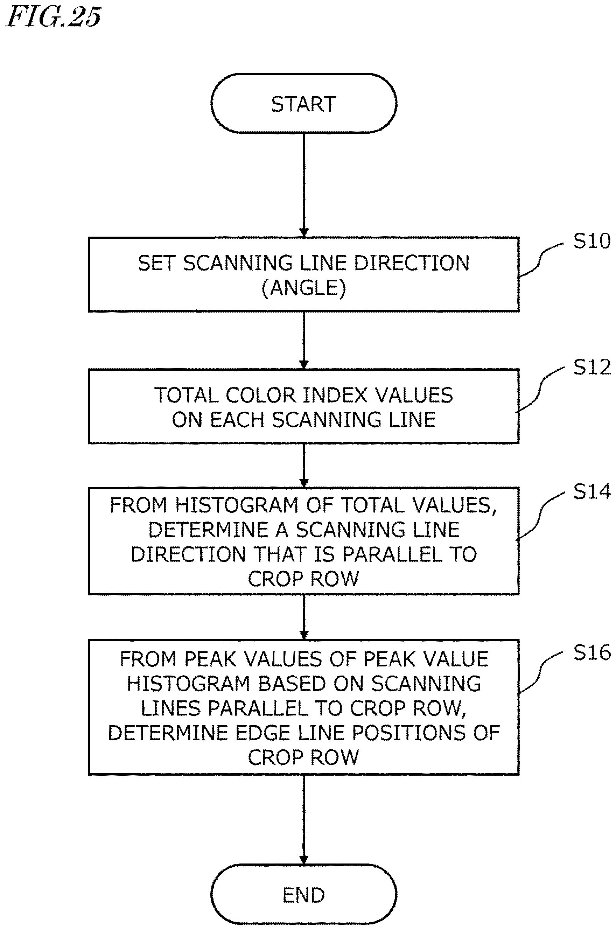

FIG. **25** is a flowchart showing an example procedure of varying the direction (angle) of scanning lines **S** in order to search for a direction (angle) of scanning lines **S** that is parallel to the direction of the crop rows **12.**

At step **S10**, a direction (angle) of the scanning lines **S** is set. Herein, clockwise angles θ are defined relative to the u axis of the image coordinate system (see FIG. **21** and FIG. **23**). The search through angles θ may be done by setting a range of e.g., 60 to 120 degrees and using angle variations of 1 degree, for example. In this case, at step **S1**, 60, 61, 62,..., 119 and 120 degrees are given as the angle θ of scanning lines **S.**

At step **S12**, index values are totaled for the pixels on any scanning line **S** extending in the direction of each angle θ, thereby generating a histogram of total values. The histogram will exhibit a different distribution depending on the angle θ.

At step **S14**, from among a plurality of histograms thus obtained, a histogram is selected that has steep boundaries between bumps and dents, e.g., as shown in FIG. **22**, such that the crop rows **12** are clearly distinguishable from the intermediate regions **14**, and the angle θ of scanning lines **S** that is conducive to that histogram is determined.

At step **S16**, from the peak values of the histogram corresponding to the angle θ determined at step **S14**, edge lines of each crop row **12** are determined. As described above, positions of scanning lines **S** having a total value that is 0.8 times the peak, for example, may be adopted as the edge lines.

Note that, when searching through directions (angles) of the scanning lines **S**, each time the angle θ is varied by 1 degree within the range of search, a histogram of total values on the scanning lines **S** at that angle θ may be generated. A feature (e.g., recess depth/protrusion height, a differential value of the envelope, etc.) may be calculated from the waveform of the histogram, and based on that feature, it may be determined whether the direction of the crop rows **12** is parallel to the direction of the scanning lines **S** or not.

Note that the method of determining the angle θ is not limited to the above examples. In the case where the direction in which the crop rows extend is known through measurements, the direction of the agricultural machine may be measured with an inertial measurement unit (IMU) mounted on the agricultural machine **100**, and its angle θ with respect to the direction in which the crop rows extend may be determined.

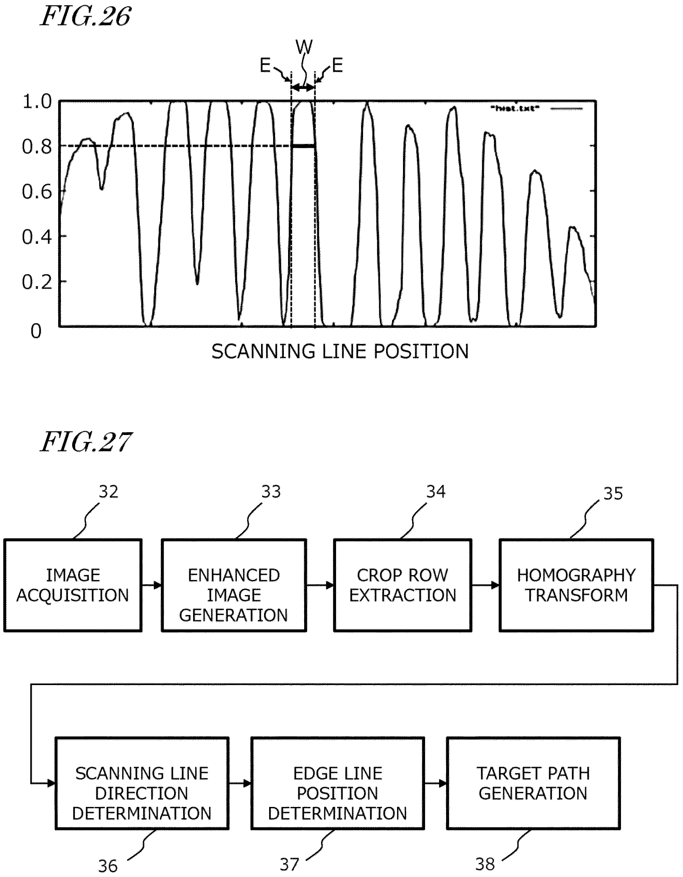

FIG. **26** is a diagram showing an example of a total value histogram that is generated by the plan view image of FIG. **19.** For a protrusion of the histogram that is located in the center, scanning line positions that are 0.8 times its peak value are determined as the positions of edge lines **E.** In this histogram, the protrusion peaks become lower and the protrusion peaks become more spread out as the scanning line positions become more distant toward the right and the left from the center. This is because: as is clear from the image of FIG. **19**, the image has little distortion at the center of the plan view image, whereas distortion of the image increases away from the center toward the right and the left; and the black triangular regions located at opposite sides of the bottom side cause a decrease in the total values.

When detection of crop rows is utilized for the traveling of the agricultural machine, the crop rows to be accurately detected are at the center of the image or its vicinity. Therefore, distortion in regions near both ends of the right-left direction of the plan view image can be ignored.

FIG. **27** is a block diagram showing a series of processes that are executed by the processing device **122** according to the present embodiment. As shown in FIG. **27**, by executing an image acquisition **32**, an enhanced image generation **33**, a crop row extraction **34**, and a homography transformation **35**, the processing device **122** is able to obtain the plan view image **44** shown in FIG. **23**, for example. By further executing a scanning line direction determination **36** and an edge line position determination **37**, the processing device **122** is able to obtain the positions of edge lines of the crop rows. Thereafter, the processing device **122**, or a path generator that has acquired information indicating the positions of the edge lines from the processing device **122**, is able to execute a target path generation **38** for the agricultural machine, on the basis of the edge lines. A target path may be generated such that wheels that are included in the agricultural machine are maintained within an intermediate region (work path) **14** that is interposed between the edge lines **E.** For example, a target path may be generated such that the central portion along the width direction of any tire that is attached to a metal wheel passes through the center between two edge lines that are located at both ends of an intermediate region (work path) **14.** With such a target path, even if the agricultural machine goes off the target path during travel by about several centimeters, the tires are less likely to go into a crop row.

It has been confirmed that, according to embodiments of the present disclosure, crop row detection with high accuracy is possible by suppressing the influences of forward light, backlight, sunny weather, cloudy weather, fog, and other weather conditions, or daylighting conditions that vary depending on the time zone of work. It has also been confirmed that crop row detection with high robustness is possible even when there is a change in the kind of crop (cabbage, broccoli, radish, carrot, lettuce, Chinese cabbage, etc.), growth state (from seedling to fully grown), presence/absence of diseases, presence/absence of fallen leaves or weeds, and soil color.

In the above embodiment, thereafter homography transformation is executed after performing a step of determining a binarization threshold and extracting crop regions based on pixels at a threshold or above. However, the step of extracting crop regions may be performed after homography transformation. Specifically, in the series of processes shown in FIG. **27**, the homography transformation **35** may be executed between the enhanced image generation **33** and the crop row extraction **34**, or executed between the image acquisition **32** and the enhanced image generation **33**.

Hereinafter, a modified example of the method of row detection to be performed by an image recognition system according to the present disclosure will be described.

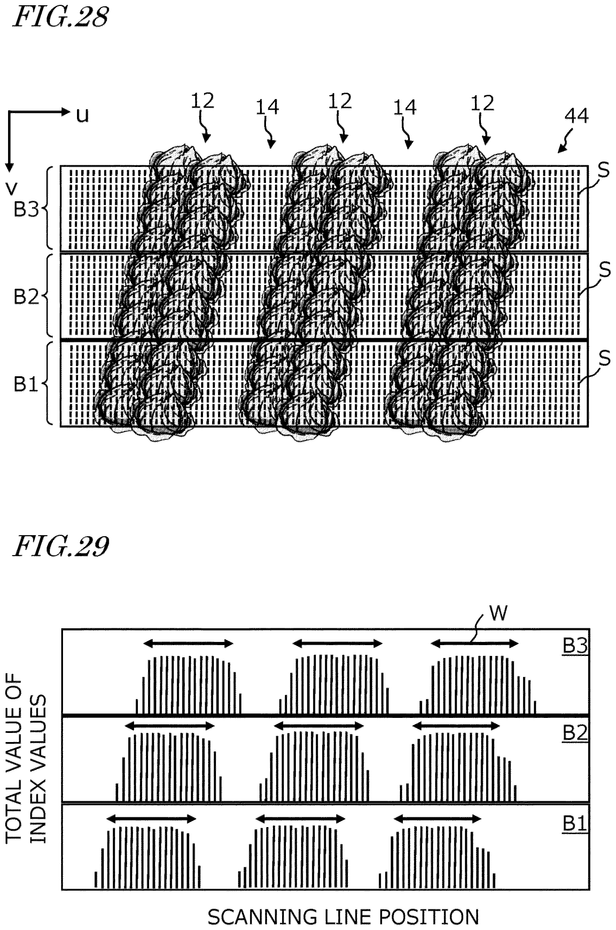

FIG. **28** is a diagram for describing a method which splits a whole or a part of the plan view image into a plurality of blocks, and determines the positions of edge lines for each of the plurality of blocks.

In this modified example, the processing device **122** splits a whole or a part of the plan view image **44** into a plurality of blocks. Then, for each of the plurality of blocks, the positions of edge lines **E** of crop rows **12** are determined. In the illustrated example, in the plan view image, there are three blocks **B1**, **B2** and **B3** in belt shapes that are continuous along the horizontal direction in the image. The processing device **122** is able to determine edge lines of crop rows based on a belt shape in a direction that is different from the traveling direction of the agricultural machine **100.**

FIG. **29** is a diagram schematically showing a relationship (total value histogram) between positions of scanning lines **S** and total values of index values for each of blocks **B1**, **B2** and **B3** of the plan view image of FIG. **28.** The scanning line **S** for which to perform totalization is always parallel to the vertical direction in the image. Totalization of index values is performed block by block, and there is no need to change the direction (angle) of the scanning lines **S.** By reducing the length of the scanning lines **S**, even if the crop rows **12** extend obliquely, it is possible to appropriately detect regions of the second pixels (background pixels) that are ascribable to the intermediate regions (work paths) **14.** This eliminates the need to change the angles of the scanning lines **S.**

In FIG. **29**, both ends of an arrow **W** indicate the positions of edge lines of a crop row, as determined for each of blocks **B1**, **B2** and **B3.** In the example shown in FIG. **28**, the directions of the crop rows **12** are inclined with respect to the direction of the scanning lines **S.** Therefore, in the earlier-described case where scanning line positions exhibiting a value that is 0.8 times a peak value of the total value histogram are adopted as the positions of edge lines **E** of a crop row **12**, the positions of such edge lines **E** correspond to both ends of a "width" passing near the center of the crop row **12**, in each of blocks **B1**, **B2** and **B3.**

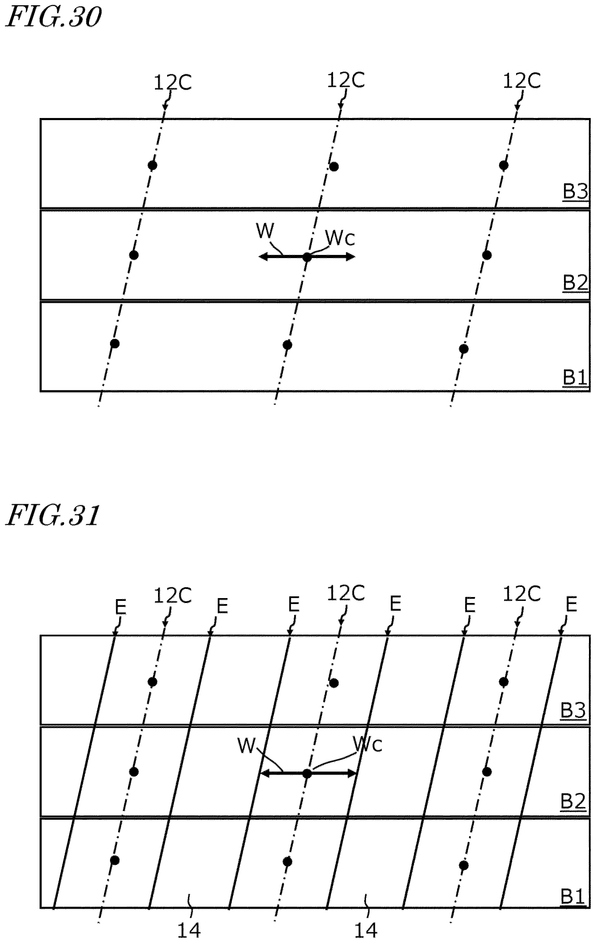

FIG. **30** shows crop row centers **Wc** in each of blocks **B1**, **B2** and **B3** in FIG. **29.** A crop row center **Wc** is determined from the center of an arrow **W** that defines the edge lines of a crop row as determined from the total value histogram of FIG. **29**, and is located at the center of each block along the vertical direction in the image. FIG. **30** shows examples of approximation line **12C** for crop row centers **Wc** belonging to each identical crop row **12.** An approximation line **12C** is a straight line that is determined so that a mean square of its distances (errors) from the plurality of crop row centers **Wc** of each crop row **12** is minimum, for example. Such an approximation line **12C** corresponds to a line passing through the center of the crop row **12.**

FIG. **31** is a top view showing examples of edge lines **E** of crop rows **12** as determined from the approximation lines **12C** in FIG. **30.** In this example, two edge lines **E** that are associated with each crop row **12** have an interval that is equal to the length of an arrow **W**, and are at equidistant positions from an approximation line **12C.**

According to this modified example, there is no need to change the directions (angles) of the scanning lines, and the edge lines **E** of the crop rows **12** can be determined with less computational load. Note that the length of each block along the vertical direction in the image may be set to an equivalent of a distance of 1 to 2 meters on the ground surface, for example. Although this modified example splits one image into three blocks to derive total value histograms, the number of blocks may be four or more. The block shape are not limited to the above examples. In the plan view image, the block may be in belt shapes that are continuous along either the horizontal direction in the image or the vertical direction in the image. The processing device **122** is able to determine the edge lines of the crop rows through splitting into blocks of belt shapes extending in a direction that is different from the traveling direction of the agricultural machine **100.**

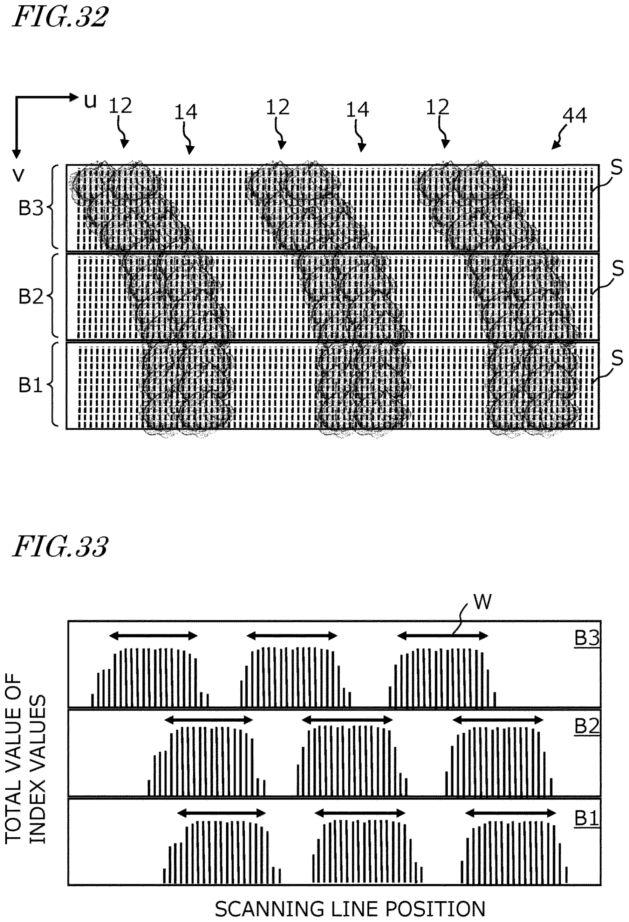

FIG. **32** schematically illustrates the crop rows **12** in the plan view image **44** including portions that are bent in curve shapes. FIG. **33** schematically shows a total value histogram for each of blocks **B1**, **B2** and **B3** of the plan view image **44** of FIG. **32.**

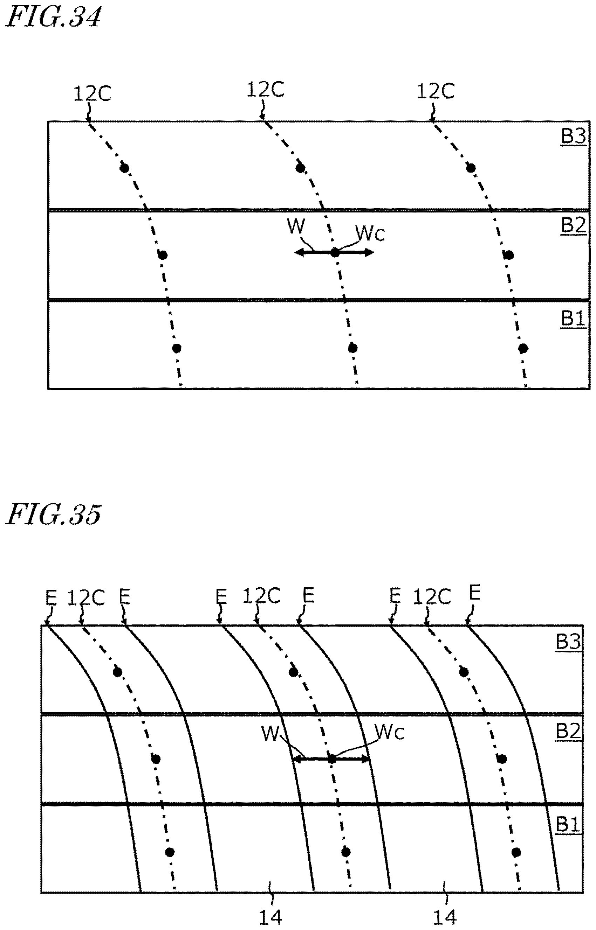

FIG. **34** is a diagram showing crop row centers **Wc** in each of blocks **B1**, **B2** and **B3** in FIG. **33**, and examples of approximation lines **12C** for the respective crop row centers **Xc.** An approximation line **12C** in this example is a curve (e.g., a higher-order curve such as a cubic curve) that is derived so that a mean square of its distances (errors) from the crop row centers **Wc** of each crop row **12** is minimum, for example. Such approximation lines **12C** correspond to curved lines which pass through the centers of the crop rows **12** having a curved portion.

FIG. **35** is a top view showing examples of edge lines **E** of crop rows **12** as determined from the approximation lines in FIG. **34.** The edge lines **E** are generated by a similar method to the method that has been described with reference to FIG. **31.** In other words, two edge lines **E** that are associated with each crop row **12** have an interval that is equal to the length of an arrow **W**, and are at equidistant positions from an approximation line **12C.**

As described above, by splitting the plan view image into a plurality of blocks and generating a total value histogram for each block, it becomes easy to determine the direction of a crop row, and even if the crop row changes its direction in the middle, it is possible to know the direction after the change.

The above-described methods of row detection can all be implemented by a computer, and carried out by causing the computer to execute desired operations.

As can be seen from the above explanation, in order to determine the positions of edge lines **E** of crop rows **12** with a high positional accuracy, it is preferable to increase the number of scanning lines, or reduce the length of each block along the vertical direction in the image. However, performing row detection by the above method for all of the time-series images that are acquired by the imaging device **120** or the entire range of each image may increase the computational load for the processing device **122.**

As described above, after the image recognition system **1000** has started the image processing operation in response to the operator selecting the automatic steering mode with the mode switch **114**, the period until detecting a row region such as a crop row may be used for a low-positional accuracy detection process. This low-positional accuracy detection process may be, for example, a process that is directed to some selected images among the time-series images acquired by the imaging device **120** as the target. Then, once a row region is detected, it is preferable to start a detection process with an enhanced positional accuracy by increasing the number of scanning lines, reducing the length of each block along the vertical direction in the image, or increasing the number of blocks. In a state where a row region has been detected and it has been determined that row-following travel is possible, after the operator issues a command to start row-following travel with the start switch **112**, a detection process with an enhanced accuracy may be started.

Thus, by carrying out the processing to be performed by the image recognition system **1000** in two or more steps, it becomes possible to reduce the computational load for the processing device **122** in effect. Moreover, because a computation to determine a row region that is executed with a high positional accuracy imposes a high computational load on the processing device **122** of the image recognition system **1000**, it is preferable to start the execution based on a command from the start switch **112** or the like as a trigger, for example.

In order to determine row detection, the aforementioned blocks may be set in a region (interest region) that is selected from within the image. When starting row-following travel, the image recognition system **1000** may perform a process of selecting an interest region as a target of image recognition processing, such that the interest region during the row-following travel is smaller than the interest region before the row-following travel. Specifically, during row-following travel, a relatively narrow range that includes a row region to be followed may be selected as the interest region.

(Embodiment 2 of image recognition system)

Row detection by an image recognition system according to an illustrative second embodiment of the present disclosure will be described. In the present embodiment, ridge detection is performed as a "row detection".

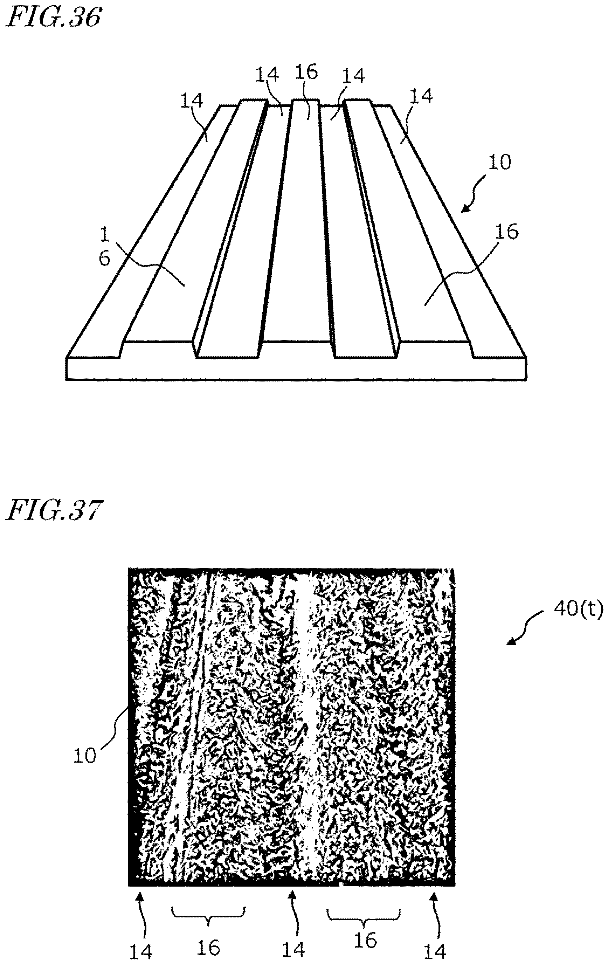

FIG. **36** is a perspective view schematically showing rows of ridges **16** made on the ground surface **10**. "Ridges" are places where plants for serial sowing or serial planting are to be planted, in which earth is raised high at intervals to result in bumps that extend essentially linearly. A cross-sectional shape of a ridge **16** taken perpendicularly to the direction in the ridge **16** extends may be, schematically, a trapezoid, a semicylindrical shape, or semicircular shape. In FIG. **36**, ridges **16** having a trapezoidal cross section are schematically shown. The actual ridges will not have such simple shapes as those shown in FIG. **36**. What exists between two adjacent ridges **16** is an intermediate region **14**, called interridge land. The intermediate regions **14** function as work paths. Crops may be planted in the ridges **16**; or, without planting having taken place, only the soil may be exposed on the ridges **16** as a whole. Each of the ridges **16** may be covered with a mulch.

The height, width, and intervals of the ridge **16** do not need to be uniform, but may vary from place to place. Generally speaking, the height of a ridge **16** is a difference of the ridge in height from the interridge land. In the present specification, the "height" of a ridge **16** is defined by the distance to an upper surface of the ridge **16** from the aforementioned reference plane **Re.**

In the example of FIG. **36**, the edge lines of the ridges **16** are clear. However, actual ridges **16** are portions of the ground surface **10** that are continuous from the intermediate regions **14**, and the "cross-sectional shapes" of the ridges **16** may be various as aforementioned; therefore, the boundaries between the ridges **16** and the intermediate regions **14** are not always clear. In embodiments of the present disclosure, the edge lines of a ridge **16**, i.e., the boundaries between a ridge **16** and intermediate regions **14**, are defined as positions that are located on opposite sides of a peak of the ridge **16**, the positions being at a height which accounts for a predetermined rate with respect to the peak. The positions of edge lines are positions having a height that is 0.8 times the peak of each ridge **16**, for example.

As shown in FIG. **2**, an image recognition system **1000** according to the present embodiment also includes an imaging device **120** and a processing device **122** that performs image processing for time-series color images that have been acquired from the imaging device **120**. The hardware configuration of the processing device **122** is identical to the configuration of the processing device **122** according to the first embodiment.

In the present embodiment, the processing device **122** acquires time-series images from the imaging device **120**, and performs operations S21, S22 and S23 below.

(S21) from a plurality of images among time-series images that have been acquired at different points in time, determine a first amount of movement of each of a plurality of feature points in an image plane, through feature point matching.
(S22) through perspective projection of each of the plurality of feature points from the image plane onto a reference plane corresponding to the ground surface, determine a second amount of movement of each projection point in the reference plane based on the first amount of movement.
(S23) based on the second amount of movement, estimate heights of the plurality of feature points from the reference plane to detect a ridge on the ground surface.

Hereinafter, specific examples of operations S21, S22 and S23 will be described in detail.

First, operation S21 will be described. In operation S11, from a plurality of images among the time-series images that have been acquired at different points in time, a first amount of movement of each of the plurality of feature points in an image plane is determined through feature point matching. The time-series images are an aggregation of images that are chronologically acquired by the imaging device **120** through imaging. The time-series images do not need to be color images, but may be color images. In the case where the imaging device **120** outputs time-series color images, the processing device **122** may apply gray-scale processing to a given color image for processing among the time-series color images. As has been described with reference to the first embodiment, each image is composed of a frame-by-frame group of pixels. Similarly, the frame rate is as has been described with reference to the first embodiment.

FIG. **37** shows one frame of image **40(t)** among time-series images acquired by the imaging device (which in this example is a monocular camera) **122** mounted on the agricultural machine **100** at time t. In this example, crops are not planted on the ridges **16**. The data of the image **40(t)** captured by the monocular camera does not contain depth information. Therefore, it is impossible to know from the single image **40(t)** the difference in height between the ridges **16** and the intermediate regions **14.**

Not only at time t but also at other points in time, e.g., time t+1, t+2, t+3,..., the imaging device **120** chronologically acquires an image **40(t+1)**, an image **40(t+2)**, and image **40(t+3),**.... Each of the plurality of images that are chronologically acquired by the imaging device **120** during the travel of the agricultural machine **100** may contain the same region of the ground surface **10** in a partially overlapping manner.

In the present embodiment, the processing device **122** extracts feature points from the image **40(t)**, the image **40(t+1),**.... A "feature point" is a point whose pixel(s) has a luminance value or color that is distinguishable from those of the surrounding pixels, such that the position(s) of the pixel(s) can be identified within the image. By extracting feature points in the image, a plurality of images that have captured the same scene can be associated with one another. In a region of the image where the luminance value and color are uniform, it is difficult to distinguish any pixel in that region from the surrounding pixels. Therefore, a feature point is to be selected from within a region in which the luminance value or color locally changes within the image. A feature point is a pixel or a group of pixels that has a "local feature".

In the present embodiment, the purpose of extracting a feature point is to measure an amount of movement of the feature point through feature point matching from time-series images **40(t), 40(t+1),**... that are acquired while the agricultural machine **100** is moving. Extraction of a feature point that is suitable for such feature point matching can be performed by the processing device **122** based on image processing. Examples of feature-point extraction algorithms based on image processing include SIFT (Scale-invariant feature transform), SURF (Speed-Upped Robust Feature), KAZE, and A-KAZE (ACCELERATED-KAZE). Similarly to SIFT or SURF, KAZE and A-KAZE are feature-point extraction algorithms that are robust because of their strength in scaling, rotation, and changes in lighting. Unlike SIFT and SURF, KAZE and A-KAZE do not employ a Gaussian filter. Therefore, KAZE and A-KAZE are unlikely to be affected by rotation, scales, and changes in luminance values, and are able to extract feature points even from a region of the image where changes in the luminance value and color are relatively small. This makes it easy to extract feature points that are suitable for feature point matching, even from an image of the soil surface or the like. As compared to KAZE, A-KAZE is advantageous due to its high robustness and ability to enhance the processing speed. In the present embodiment, the A-KAZE algorithm is used to extract feature points. However, the algorithm for feature point matching is not limited to this example.

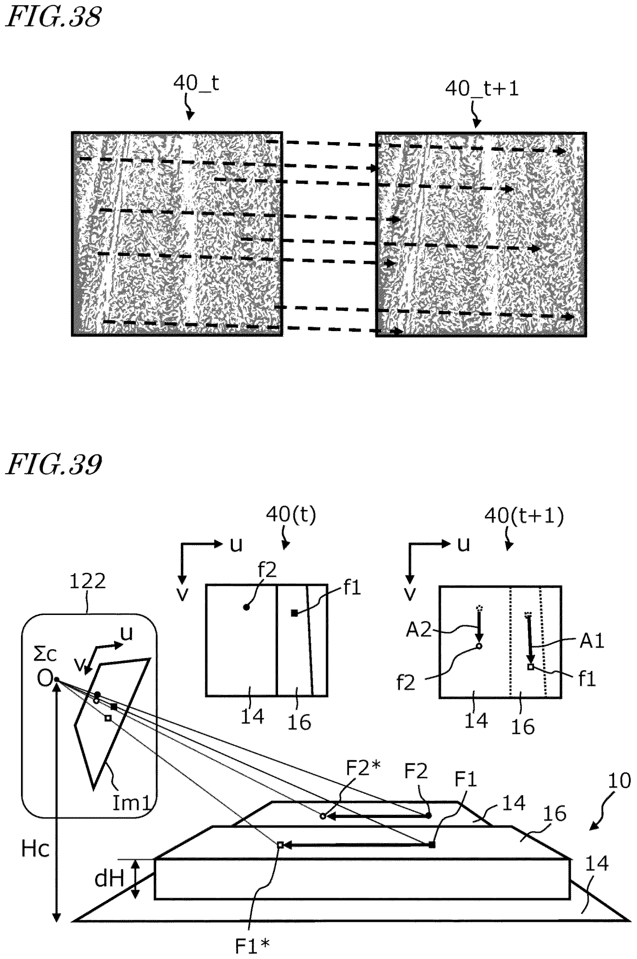

FIG. **38** schematically shows a correspondence of feature points between the image **40(t)** acquired from the imaging device at time t and the image **40(t+1)** acquired at time t+1. Herein, the time interval between time t and time t+1 may be e.g., not less than 100 milliseconds and not more than 500 seconds.

Finding the association between a plurality of feature points extracted from the image **40(t)** and a plurality of feature points in the image **40(t+1)** corresponding to the aforementioned plurality of feature points is carried out by the algorithm of feature point matching. In FIG. **38**, 8 pairs of corresponding feature points are connected by arrows. In the present embodiment, by A-KAZE, the processing device 122 is able to extract e.g. hundreds to over one thousand feature points from each of the image **40(t)** and the image **40(t+1)**. The number of feature points to be extracted may be determined based on the number of images to be processed in one second.

After performing such feature point matching, for each of the plurality of feature points, the processing device **122** determines an amount of movement (first amount of movement) in the image plane. It is not that the first amount of movement determined from the two images **40(t)** and **40(t+1)** has one common value for all feature points. Depending on the physical difference in height between feature points existing on the ground surface **10**, the first amount of movement exhibits different values.

FIG. **39** is a perspective view schematically showing the movement of a ridge **16** and an intermediate region (work path) **14** appearing in images acquired by the imaging device **120**, where the image **40(t)** and the image **40(t+1)** are also schematically shown. FIG. **39** schematically shows how a point **F1** on the ridge **16** and a point **F2** on the intermediate region (interridge land or work path) **14** may horizontally move toward the left side of the figure. This horizontal movement is a relative motion that occurs as the imaging device **120** fixed to the agricultural machine **100** moves toward the right side together with the agricultural machine **100.** In FIG. **39,** for simplicity, an origin **O** of the camera coordinate system Σ**c** of the imaging device **120** is kept stationary, while the ground surface **10** moves toward the left side. The origin **O** of the camera coordinate system Σ**c** has a height **He.** In the illustrated example, the ridge **16** is a simplified ridge shape having a height **dH.**

In the image **40(t)** of FIG. **39,** the feature point **f1** of the ridge **16** and the feature point **f2** of the intermediate region **14** are shown. These feature points **f1** and **f2** are examples of a multitude of feature points which are extracted by a feature-point extraction algorithm such as A-KAZE. In the image **40(t+1)**, the feature points **f1** and **f2** after the movement are shown. Also in the image **40(t+1)**, for referencing sake, arrow **A1** indicating the movement of the feature point **f1** and arrow **A2** indicating the movement of the feature point **f2**, during the period of time from time t to t+1, are shown. The length of arrow **A1** (corresponding to the first amount of movement) is greater than the length of arrow **A2** (corresponding to the first amount of movement). Thus, the amount of movement of a feature point in the image (first amount of movement) differs depending on the distance of the corresponding point of the subject from the origin **O** of the camera coordinate system Σ**c**. This id due to the geometric nature of perspective projection.

The feature points **f1** and **f2** in the image **40(t)** are, respectively, points resulting through a perspective projection of the points **F1** and **F2** on the ground surface **10**, as the subjects, onto the image plane **Im1** of the imaging device **120**. Similarly, the feature points **f1** and **f2** in the image **40(t+1)** are, respectively, points resulting through a perspective projection of the points **F1\*** and **F2\*** on the ground surface **10**, as the subjects, onto the image plane **Im1** of the imaging device **120**. The center point of perspective projection is the origin **O** of the camera coordinate system Σ**c** of the imaging device **120**. Since perspective projection has a bidirectional relationship, the points **F1** and **F2** can be said to be points resulting through a perspective projection of the feature points **f1** and **f2** in the image **40(t)** onto the ground surface **10**. Similarly, the points **F1\*** and **F2\*** can be said to be points resulting through a perspective projection of the feature points **f1** and **f2** in the image **40(t)** onto the ground surface **10**.

As shown in FIG. **39**, from time t to time t+1, the point **F1** on the ridge **16** moves to the position of the point **F1\***, and the point **F2** on the intermediate region **14** moves to the position of the point **F2\***. The distances of these movements are each equal to the distance (distance of horizontal movement) that was traveled by the agricultural machine **100** from time t to time t+1. On the other hand, the amounts of movement of the feature points **f1** and **f2** on the image plane **Im1** of the imaging device **120** are different from each other.

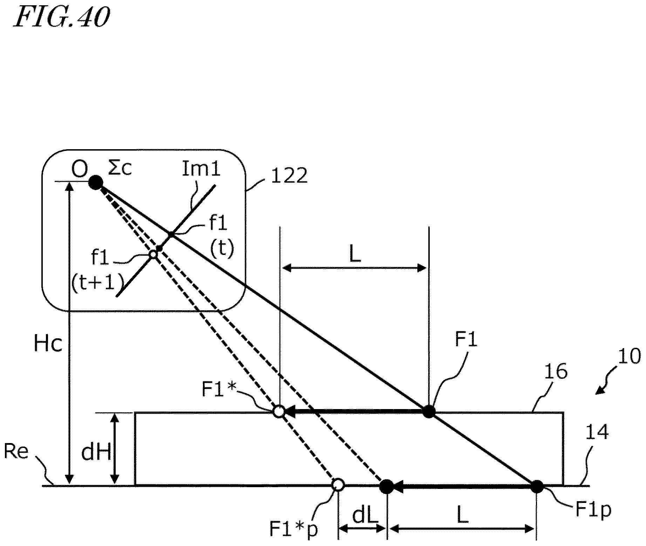

FIG. **40** is a diagram schematically showing a relationship between: the amount of movement (**L**) of the point **F1** on the ridge **16**, corresponding to the feature point **f1** on the image plane **Im1** of the imaging device **120**; and the amount of movement (second amount of movement **L+dL**) of a point (projection point) **F1p** projected onto the reference plane **Re**. In this example, the height of the reference plane **Re** is matched to the height of the intermediate region (interridge land) **14**, while the ridge **16** has the height **dH.**

As can be seen from FIG. **40**, the point **F1** on the ridge **16** has moved toward left by a distance (amount of movement) **L** that is equal to the traveled distance of the agricultural machine **100**; however, the amount of movement (second amount of movement) of the point (projection point) **F1p** resulting through perspective projection onto the reference plane **Re** is expressed as **L+dL**, which is longer than **L**. This is because the point **F1** on the ridge **16** is at a higher position than the reference plane **Re**, and is closer to the center (origin **O** of the camera coordinate system) of the perspective projection. Corresponding to this excess length **dL**, the amount of movement (first amount of movement) on the image plane **Im1** is increased.

From the ratio (homothetic ratio) between lengths of the sides of two homothetic triangles shown in FIG. **40**, the following formula is derived.

[eq. 6]

$$\frac{Hc}{L + dL} = \frac{(Hc - dH)}{L}$$

The above formula is transformed to give the following formula.

[eq. 7]

$$dH = Hc\left(1.0 - \frac{L}{L+dL}\right)$$

In order to estimate the size of a bump-dent difference on the ground surface **10** based on the above formula, the processing device **122** according to the present embodiment performs operation S22. That is, each of the plurality of feature points is perspective-projected from the image plane onto the reference plane **Re** corresponding to the ground surface **10**, and the second amount of movement (L+dL) of each projection point in the reference plane **Re** is determined based on the first amount of movement. The distance **L** in the above formula can be acquired by measuring the traveled distance of the agricultural machine **100**. Moreover, the height **He** of the origin **O** of the camera coordinate system from the reference plane **Re** is known. Therefore, once the second amount of movement (L+dL) becomes known, the height **dH** of the ridge **16** can be calculated from the formula of eq. 7. The second amount of movement (L+dL) itself can be determined from the first amount of movement.

After performing operation S22, the processing device **122** performs operation S23.

In operation S23, based on the second amount of movement (L+dL) of each feature point, the processing device **122** estimates the height **dH** of each feature point from the reference plane **Re**, and detects the ridge **16** on the ground surface **10**.

Thus, in the present embodiment, given a height **He** of the center point **O** of perspective projection from the reference plane **Re**, heights **dH** of the plurality of feature points from the reference plane **Re**, a second amount of movement **L** of a feature point (whose **dH** is zero) on the reference plane **Re**, and a second amount of movement L+dL of a feature point whose dH is greater than zero, the height of each feature point can be determined as Hc·(1.0-L/(L+dL)).

When determining the second amount of movement from the first amount of movement, homography transformation can be utilized. Specifically, by using the aforementioned inverse $H1^{-1}$ of the transformation matrix H1, the coordinates of each feature point on the image plane **Im1** may be converted into coordinates of a corresponding point on the reference plane **Re**. Therefore, first, the processing device **122** determines a first amount of movement from the coordinates of each feature point on the image plane **Im1** before and after the movement. Next, after the coordinates of each feature point are changed through homography transformation into coordinates of a corresponding point on the reference plane **Re**, a second amount of movement can be determined from the coordinates before and after the movement on the reference plane **Re.**

[eq. 8]

$$\begin{pmatrix} X \\ Y \\ 1 \end{pmatrix} = H1^{-1} \begin{pmatrix} u \\ v \\ 1 \end{pmatrix}$$

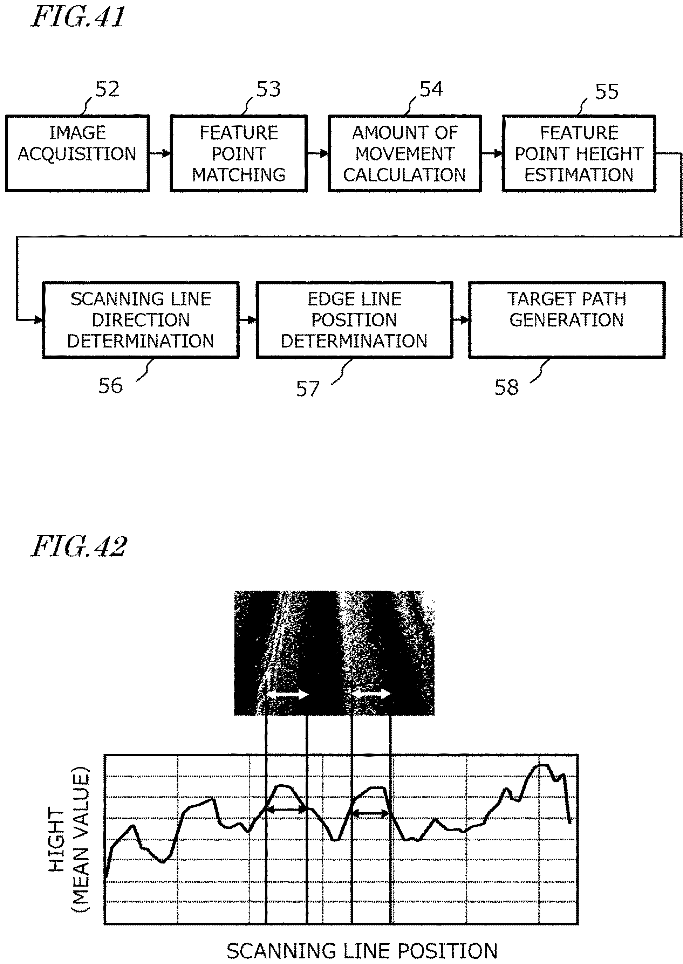

FIG. **41** is a block diagram showing a series of processes that are executed by the processing device **122** according to the second embodiment. As shown in FIG. **41**, the processing device **122** executes an image acquisition **52**, a feature point matching **53**, an amount of movement calculation **54**, and a feature point height estimation **55**. As a result, for each of a multitude of feature points in the image, an estimated value of height from the reference plane **Re** can be obtained. A two-dimensional map of such estimated values of height represents a distribution of differences in height of bumps and dents existing on the ground surface **10**.

As has been described with respect to the first embodiment, a plurality of scanning lines are also set in the present embodiment. In the present embodiment, however, a mean value of heights of feature points is calculated along each scanning line. Moreover, by varying the direction (angle) of the scanning lines, the direction in which a ridge extends can be found from the distribution of height mean values of feature points. Once the direction in which the ridge **16** extends is determined, edge lines of the ridge **16** can be determined by a method similar to the method of determining the edge lines of a crop row **12**. As has been described with reference to FIG. **28** and the like, adopting a method of splitting the image into a plurality of blocks makes it possible to omit a scanning line direction determination **56**.

Thus, as shown in FIG. **41**, the processing device **122** according to the present embodiment executes the scanning line direction determination **56**, an edge line position determination **57**, and a target path generation **58**.

FIG. **42** is a diagram showing a relationship between a mean value of heights of feature points on a scanning line that is parallel to the direction in which ridges extend and the position of the scanning line. In the graph of FIG. **42**, the horizontal axis represents the positions of scanning lines, whereas the vertical axis represents the height mean value of feature points on each scanning line. As shown by the graph, the height mean value repetitively increases and decreases as the position of the scanning line moves from left to right. Any position at which the height mean value exhibits a peak corresponds to the center of a ridge. Note that the curve indicating the height mean values forms a trough between two adjacent peaks. This trough corresponds to the neighborhood of the center of an intermediate region (interridge land or work path) **14**.

In the present embodiment, the processing device **122** determines, as edge lines of the ridge, positions that are located on opposite sides of the position of a peak as indicated by the height mean values, the positions having a height which accounts for a predetermined rate (e.g., 0.8 times) with respect to the peak. Above the graph of FIG. **42**, blank arrows indicating the positions of the edge lines are shown for each of two ridges in the image.

In the present embodiment, too, as has been described with reference to FIG. **28** to FIG. **35**, an image may be split into a plurality of blocks, and mean values of heights of feature points on scanning lines may be determined for each block.

According to the present embodiment, row detection does not depend on the "color of the crop row", thus providing an advantage of not being susceptible to the kind of crop or the daylighting conditions. It has been confirmed that detection is possible not only for tall ridges, e.g., "high ridges" that are often made in growing vegetables, but also for relatively low ridges whose height is in the range of 5 to 10 centimeters.

The detection of crop rows in the first embodiment and the detection of ridges in the second embodiment may be simultaneously or selectively performed by the processing device **122**. In the case where crops are planted on the ridges, edge lines of crop rows and edge lines of ridges are determined. The target path for the agricultural machine may be determined based on both kinds of or one kind of edge lines.

The processing device **122** may calculate a detection reliability for each of crop row detection and ridge detection. The reliability of crop row detection may be determined based on the distribution of total values of index values shown in FIG. **29**, the magnitude of the peak values, etc., for example. The reliability of ridge detection may be determined based on the magnitude of the difference between a local maximum and a local minimum in the height distribution shown in FIG. **42,** etc., for example. For instance, in the case where a target path has been generated based on the edge lines of a detected crop row and the agricultural machine is traveling along that target path, ridge detection may be performed in the background so that a target path based on the edge lines of a ridge will be generated at any place where crop row detection is impossible or its reliability has decreased to below a predetermined level.

In the case where the processing device **122** is capable of performing both crop row detection and ridge detection, one of crop row detection and ridge detection, or both, may be performed in accordance with the operator's selection.

(Embodiment 3 of image recognition system)

Hereinafter, row detection system in an illustrative third embodiment of the present disclosure will be described. Herein, selection of an interest region will be described in detail.

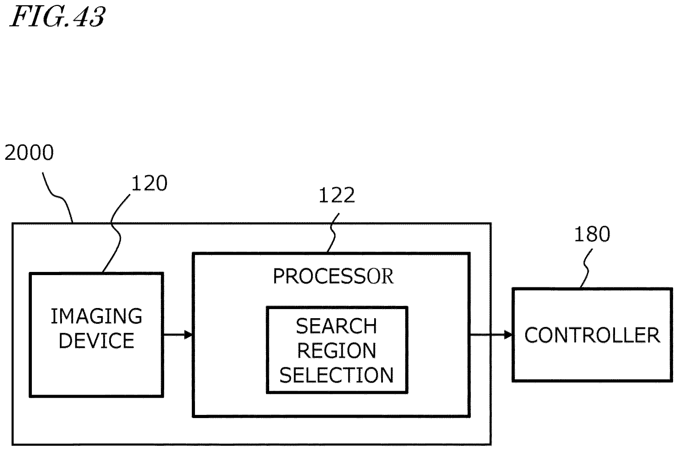

FIG. **43** shows an example of a basic configuration of the image recognition system **1000** according to the present embodiment. The image recognition system 1**000** includes a processing device **122** having a similar hardware configuration to those of the other embodiments. From time-series images, the processing device **122** selects an interest region in which to detect at least one of crop rows and ridges. This interest region has a size and shape containing at least a portion of the wheel(s)

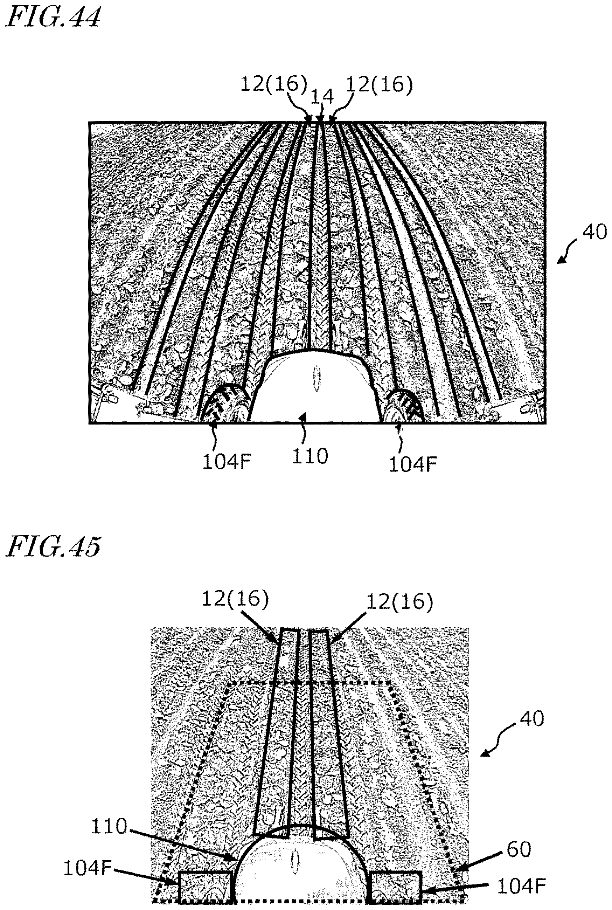

FIG. **44** shows an example of the image **40** acquired by the processing device **122** from the imaging device **120**. The image **40** is one of the time-series images. The following appears in this image **40**: crop rows **12**, intermediate regions **14**, a portion of the vehicle body **110** of the agricultural machine **100**, and portions of the front wheels **104F.** In FIG. **44**, for referencing sake, edge lines are indicated by blank lines.

FIG. **45** is a diagram showing a portion of the image of FIG. **44**. In FIG. **45**, the portion of the vehicle body **110** of the agricultural machine **100** and the portions of the front wheels **104F** appearing in the image **40** are surrounded by blank lines. In the image **40** of FIG. **45**, an example of an interest region **60** is indicated by a trapezoid of broken lines containing the portions of the front wheels **104F**. The interest region **60** has a shape that contains, among at least one of the crop rows and the ridges existing in the image **40**, a crop row or ridge that is located on a left side of the front wheels **104F** over to a crop row or ridge that is located on a right side of the front wheels **104F.**

As can be seen from the image exemplified in FIG. **19**, peripheral portions suffer from more distortion than does the central portion in a plan view image. Therefore, as shown in FIG. **26**, for example, the peak value becomes lower and the interval between peaks becomes broader as the scanning line position becomes more distant from the central portion.

On the other hand, the crop rows or ridges to be detected, which are needed for selecting a target path, are around the front of the traveling agricultural machine. More specifically, it suffices to accurately detect crop rows or ridges that are located near the wheels included in the traveling equipment of the agricultural machine. In the present embodiment, row detection is performed not with respect to the entire image that is acquired by the imaging device **120**, but only in a partial region, whereby the amount of computation to be performed by the processing device **122** and the time required for computation can be reduced. Because outliers caused by distortion at the image periphery can be eliminated, the accuracy of row detection is enhanced.

The selection of the interest region **60** (region setting) depends on the position and orientation in which the imaging device **120** is mounted to the agricultural machine **100**, and also on the structure or shape of the agricultural machine **100**. For example, after the imaging device **120** is mounted to the agricultural machine **100**, the range (shape, size, position) of the interest region **60** may be manually determined while confirming the image obtained from the imaging device **120** on a monitor screen. Based on the optical performance and mounted position of the imaging device **120**, the particular model of the agricultural machine, etc., the range of the interest region **60** may be finalized and input to the processing device **122**.

The processing device **122** according to the present embodiment may be configured to detect at least a portion of the wheels **10F** from the image **40** as shown in FIG. **45** by using an image recognition technique, for example. In that case, it may also be possible to adaptively change the range of the interest region **60** so as to select a region containing at least the detected portions of the front wheels **104F** as the interest region **60**.

The processing device **122** may estimate a positional relationship between the at least detected one of crop rows **12** and ridges **16** and the front wheels **104F** based on an image of the portions of the front wheels **104F** that are contained in the interest region **60**. The processing device **122** may be configured to estimate a positional relationship between the at least detected one of crop rows **12** and ridges **16** and the agricultural machine **100** based on such a positional relationship.

Note that the processing device **122** may not possess any information indicating accurate positions of the front wheels **104F** relative to the agricultural machine **100**. Such information indicating positions may be coordinates of the front wheels **104F** relative to the body coordinate system $\Sigma\mathbf{b}$ fixed to the agricultural machine **100**, for example. Even when such coordinates are previously stored in the storage device **28** of the processing device **122**, its accuracy may be compromised if the operator changes the tire size of the front wheels **104F** or changes the interval between the right and left front wheels **104F**, for example. In such cases, the processing device **122** may detect portions of the front wheels **104F** that are contained in the interest region **60**, and based on an image of the detected portions of the front wheels **104F**, estimate the positions of the front wheels **104F** relative to the agricultural machine **100**.

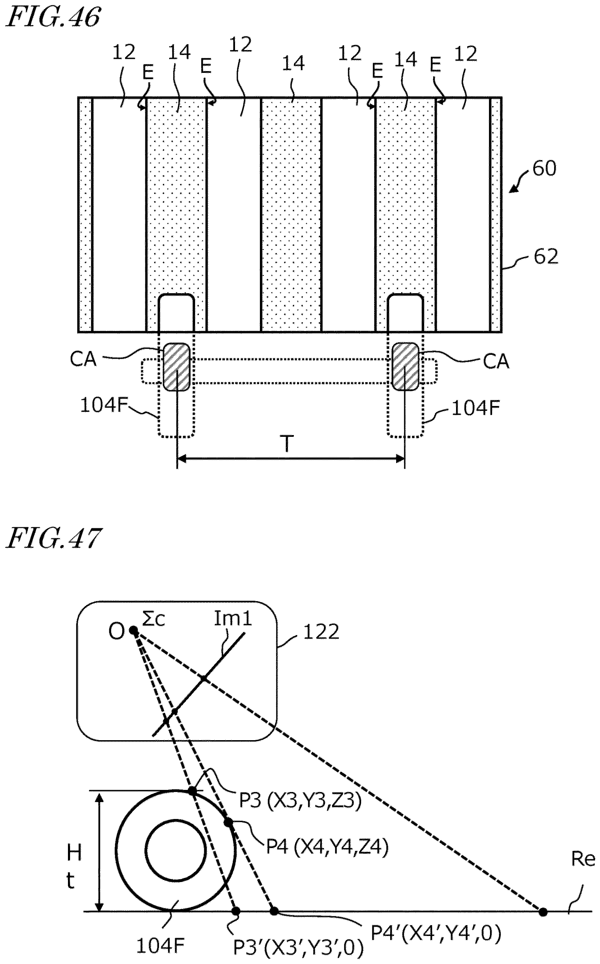

FIG. **46** is a top view schematically showing a portion of the ground surface **10** in which crop rows **12** are made. A pair of front wheels **104F** are shown in FIG. **46.** The rectangular area **62** in such a top view is a plan view image that is generated by applying the aforementioned homography transformation to the interest region **60** of the image of FIG. **45**. In FIG. **46**, the vehicle body **110** appearing in the interest region **60** of FIG. **45** is omitted from illustration. Also, because images of the portions of the front wheels **104F** appearing in the interest region **60** will be considerably deformed through homography transformation, FIG. **46** illustrates the front wheels **104F** with the shapes of figures that have just undergone "parallel projection" onto the reference plane **Re.** Furthermore, for referencing sake, FIG. **46** schematically shows tire treads (ground plane) **CA** at which the front wheels **104F** come in contact with the ground surface **10.** The distance **T** between centers of the right and left tire treads **CA** is the "tread width (track)".

In general, relative to the vehicle body **110** of the agricultural machine **100**, positions of the tire treads **CA** are known. Therefore, the positional relationship of the tire treads **CA** with the plan view image (rectangular area) **62** of the interest region **60** is also known. However, setting the interest region **60** so as to contain at least a portion of one or more wheels as in the present embodiment can provide the following effects.

·The structure of the vehicle body **110** may differ from model to model, and also the tread width (distance between centers of tire treads **CA**) **T** may differ from model to model. Even within the same model, the operator may change the tread width **T** as aforementioned. Therefore, selecting the shape and size of the interest region **60** so as to contain the wheels **104** appearing in the image will realize an image processing that can cope with various models, and cope with changes in the tread width **T** that may be made by the operator.

·It is no longer required to input the positions of the tire treads **CA** as coordinates in the body coordinate system $\Sigma\mathbf{b}$ in advance. It becomes possible to automatically acquire coordinates of the front wheels **104F** or the tire treads **CA** in the body coordinate system $\Sigma\mathbf{b}$ based on an image that is acquired by the imaging device **120**.

· On the basis of an image, it becomes possible to monitor a positional error between: the edge lines of a row determined by the image recognition system or a target path that is generated based on the edge lines; and the wheels.

Note that, as mentioned earlier, the wheels will be deformed when a plan view image of the ground surface is generated through homography transformation. In order to accurately estimate a positional relationship of the wheels (in particular tire treads **CA**) with the edge lines of a row or a target path, it is desirable to correct the homography transformation. Hereinafter, this aspect will be described.

FIG. **47** is a diagram schematically showing a positional relationship between: points **P3** and **P4** which are contained in portions of the front wheels **104F** appearing in the image **40**; and corresponding points **P3'** and **P4'** resulting through perspective projection of these points **P3** and **P4** onto the reference plane **Re.** It is assumed that the points **P3** and **P4** have coordinates (X3,Y3,Z3) and (X4,Y4,Z4), respectively, in the world coordinate system. It is also assumed that the corresponding points **P3'** and **P4'** have coordinates (X3',Y3',0) and (X4',Y4',0), respectively, in the world coordinate system. As can be seen from FIG. **47**, the points **P3** and **P4** are at higher positions than the reference plane **Re.** Therefore, if a plan view image as viewed directly from above the reference plane **Re** is generated through homography transformation, the X coordinates and Y coordinates of the corresponding points **P3'** and **P4'** on the reference plane **Re** will respectively be shifted from the X coordinates and Y coordinates of the points **P3** and **P4**. Therefore, if a plan view image is generated by applying homography transformation to the image **40** having portions of the front wheels **104F** appearing therein, images of the front wheels **104F** will appear in distorted shapes in the plan view image, thus making it difficult to estimate an accurate positional relationship.

In order to know the positional relationship between the front wheels **104F** and the edge lines of a crop row **12** or a ridge **16** based on such a plan view image, it is preferable to estimate the centers of the tire treads **CA** based on the coordinates (X3',Y3',0) and (X4',Y4',0) of the corresponding points **P3'** and **P4'**.

In the example of FIG. **47**, if the height **Ht** of the front wheels **104F** is known, then the positions, as taken on the front wheels **104F**, of the points **P3** and **P4** on the front wheels **104F** as appearing in the image can be estimated from their shapes in the image, for example, by a technique such as pattern matching. Once the positions of the points **P3** and **P4** on the front wheels **104F** are estimated, it is possible to estimate the center positions of the tire treads **CA** by correcting the coordinates (X3',Y3',0) and (X4',Y4',0) of the corresponding points **P3'** and **P4'**, for example.

Thus, in the present embodiment, by including at least a portion of the wheel(s) in the interest region, it becomes possible to monitor the relative locations of the wheels relative to a row that has been detected from within the interest region, on the basis of time-series images.

(embodiment of agricultural machine)

Next, an embodiment of an agricultural machine having a positioning system and an image recognition system of Embodiments 1 to 3 will be described. The positioning system may be any arbitrary GNSS system. Note that the procedure or algorithm of row detection by the image recognition system is not limited to the procedure or algorithms described with respect to Embodiments 1 to 3 above.

An agricultural machine according to the present embodiment includes the above-described image recognition system. Moreover, this agricultural machine includes a control system for performing control to achieve auto-steer driving by utilizing positional information of a row region that is acquired with the image recognition system, and/or ego-position information that is acquired with the positioning system. The control system is a computer system that includes a storage device and a controller, and is configured to control steering, travel, and other operations of the agricultural machine.

The positioning system includes a GNSS receiver, for example. Such a positioning system is able to identify the position of the work vehicle based on signals from GNSS satellites. However, when there are rows in the field, even if the positioning system is able to measure the position of the agricultural machine with a high accuracy, the interspaces between rows are narrow, such that the traveling equipment, e.g., wheels, of the agricultural machine may be liable to protrude into the rows depending on how the crops are planted or depending on the state of growth. In the present embodiment, however, the aforementioned image recognition system can be used to detect actually-existing rows and perform appropriate automatic steering. In other words, the automatic steering device included in the agricultural machine (controller) according to an embodiment of the present disclosure is configured to be capable of not only controlling the steering angle of the wheels responsible for steering so that the ego-position matches a previously set path, but also controlling the steering angle of the wheels responsible for steering based on the positions of the edge lines of a row that are determined by the image recognition system.

Moreover, in the agricultural machine according to the present embodiment, the processing device of the image recognition system can monitor the positional relationship between the edge lines of rows and the wheels responsible for steering on the basis of time-series color images. By generating a positional error signal from this positional relationship, it becomes possible for the automatic steering device of the agricultural machine to appropriately adjust the steering angle so as to reduce the positional error signal.

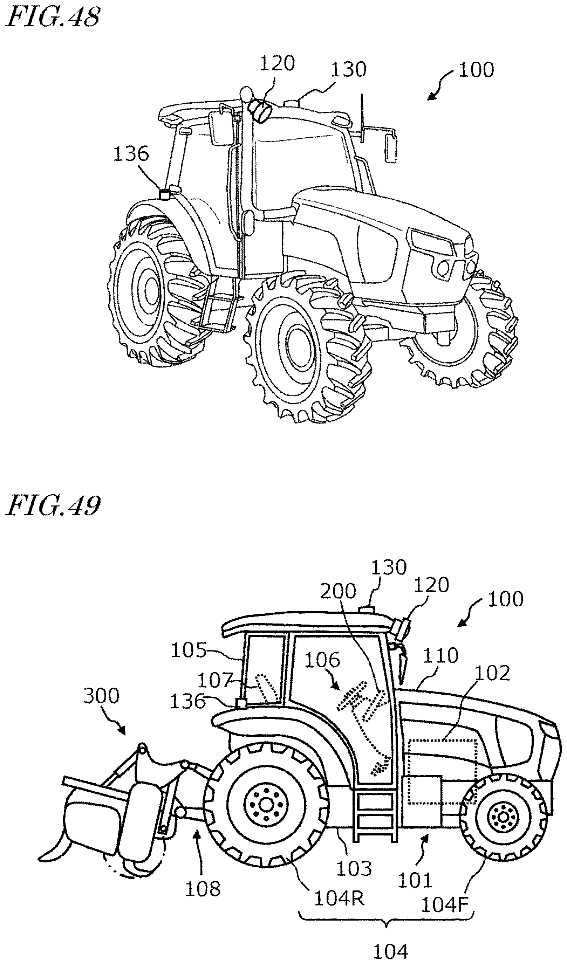

FIG. **48** is a perspective view showing an example appearance of the agricultural machine **100** according to the present embodiment. FIG. **49** is a side view schematically showing an example of the agricultural machine **100** to which an implement **300** is attached. The agricultural machine **100** according to the present embodiment is an agricultural tractor (work vehicle) having the implement **300** attached thereto. The agricultural machine **100** is not limited to a tractor, and does not need to have the implement **300** attached thereto. The row detection technique according to the present disclosure can exhibit excellent effects when used in small-sized crop management machines and vegetable transplanters that may be used for tasks associated with the interridge land, such as ridge making, intertillage, ridging, weeding, side dressing, and preventive pest control, for example.

<operation under automatic path travel and row-following travel>

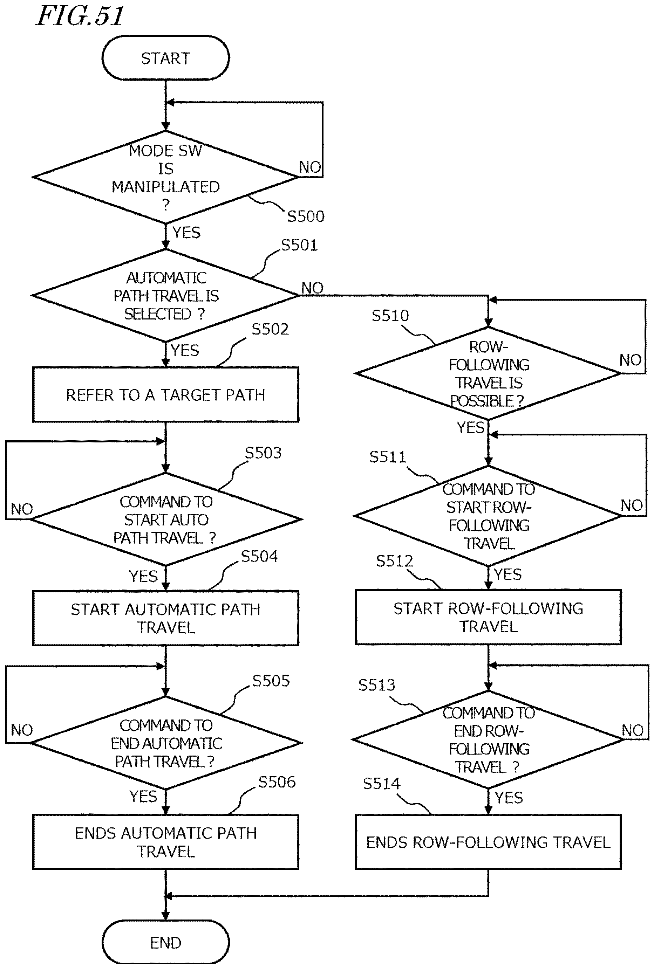

FIG. **51** is a flowchart showing an operation flow of manually switching between automatic path travel and row-following travel. As shown in FIG. **51**, when the mode switch (mode SW) **114** is manipulated (**S500**, Yes), the controller **180** determines whether automatic path travel has been selected or not (**S501**). If automatic path travel has been selected (**S501**, Yes), the controller **180** refers to a target path (main path **Q1**, turning path **Q2**) that is stored in the storage device (**S502**). If a command to start automatic path travel is given with the start switch **112** (**S503**, Yes), the controller **180** starts automatic path travel (**S504**). During automatic path travel, if a command to end automatic path travel is given with the start switch **112** (**S505**, Yes), the controller **180** ends automatic path travel (**S506**).

On the other hand, if row-following travel has been selected (**S501**, No), the controller **180** determines whether row-following travel is possible or not based on a result of detection by the image recognition system **1000** (**S510**). When it is determined that row-following travel is possible (**S510**, Yes), and if a command to start row-following travel is given with the start switch **112** (**S511**, Yes), the controller **180** starts row-following travel (**S512**). If it is determined that row-following travel is not possible (**S510**, No) or if a command to start row-following travel is not given with the start switch **112** (**S511**, No), the controller **180** does not start row-following travel.

During row-following travel, if a command to end row-following travel is given with the start switch **112** (**S513**, Yes), the controller **180** ends row-following travel (**S514**).

The agricultural machine **100** according to the present preferred embodiment includes an imaging device **120** and an obstacle sensor(s) **136**. In the present embodiment, the positioning device **130** functions as the aforementioned positioning system **2000**. Although one obstacle sensor **136** is illustrated in FIG. **48,** obstacle sensors **136** may be provided at a plurality of positions of the agricultural machine **100**.

As shown in FIG. **49,** the agricultural machine **100** includes a vehicle body **110,** a prime mover (engine) **102,** and a transmission **103**. On the vehicle body **110,** wheels **104** and a cabin **105** are provided. The wheels **104** include a pair of front wheels **104F** and a pair of rear wheels **104R**. Inside the cabin **105,** a driver's seat **107,** a steering device **106,** an operational terminal **200,** and switches for manipulation are provided. The switches may include the start switch **112** and the mode switch **114** shown in FIG. **1** and FIG. **7**. Either one or both of the front wheels **104F** and the rear wheels **104R** may be replaced by a wheel(s) with a track(s) attached thereon (a crawler(s)), rather than a tired wheel(s). The agricultural machine **100** is a four-wheel drive vehicle including four wheels **104** as driving wheels, or a two-wheel drive vehicle including a pair of front wheels **104F** or a pair of rear wheels **104R** as driving wheels.

The positioning device **130** in the present embodiment includes a GNSS receiver. The GNSS receiver includes an antenna to receive a signal(s) from a GNSS satellite(s) and a processing circuit to determine the position of the agricultural machine **100** based on the signal(s) received by the antenna. The positioning device **130** receive a GNSS signal(s) transmitted from a GNSS satellite(s), and performs positioning on the basis of the GNSS signal (s). GNSS is a general term for satellite positioning systems, such as GPS (Global Positioning System), QZSS (Quasi-Zenith Satellite System, e.g., MICHIBIKI), GLONASS, Galileo, BeiDou, and the like. Although the positioning device **130** in the present embodiment is disposed above the cabin **105,** it may be disposed at any other position.

Furthermore, the positioning device **130** may complement the position data by using a signal from an inertial measurement unit (IMU). The IMU can measure tilts and minute motions of the agricultural machine **100.** By complementing the position data based on the GNSS signal using the data acquired by the IMU, the positioning performance can be improved.

In the examples shown in FIGS. **48** and **49,** the obstacle sensor(s) **136** is provided at the rear of the vehicle body **110**. The obstacle sensor(s) **136** may be disposed at any other position than the rear of the vehicle body **110**. For example, one or more obstacle sensors **136** may be disposed at any position selected from among the sides of the vehicle body **110,** the front of the vehicle body **110,** and the cabin **105**. The obstacle sensor(s) **136** detects objects around the agricultural machine **100**. Each obstacle sensor **136** may include a laser scanner and/or an ultrasonic sonar, for example. When an obstacle exists at a position within a predetermined detection area (search area) from the obstacle sensor **136,** the obstacle sensor **136** outputs a signal indicating the presence of an obstacle. A plurality of obstacle sensors **136** may be provided at different positions of the body of the agricultural machine **100**. For example, a plurality of laser scanners and a plurality of ultrasonic sonars may be disposed at different positions of the body. Providing a multitude of obstacle sensors **136** can reduce blind spots in monitoring obstacles around the agricultural machine **100**.

The prime mover **102** may be a diesel engine, for example. Instead of a diesel engine, an electric motor may be used. The transmission **103** can change the propulsion and moving speed of the agricultural machine **100** through a speed changing mechanism. The transmission **103** can also switch between forward travel and backward travel of the agricultural machine **100**.

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the agricultural machine **100**. During manual steering, the steering angle of the front wheels **104F** can be changed as the operator manipulates the steering wheel. The power steering device includes a hydraulic device or an electric motor to supply an assisting force for changing the steering angle of the front wheels **104F**. When automatic steering is performed, under the control of a controller disposed in the agricultural machine **100**, the steering angle may be automatically adjusted by the power of the hydraulic device or electric motor (steering motor).

A linkage device **108** is provided at the rear of the vehicle body **110**. The linkage device **108** may include, e.g., a three-point linkage (also referred to as a "three-point link" or a "three-point hitch"), a PTO (Power Take Off) shaft, a universal joint, and a communication cable. The linkage device **108** allows the implement **300** to be attached to or detached from the agricultural machine **100**. The linkage device **108** is able to raise or lower the three-point linkage device with a hydraulic device, for example, thus controlling the position or pose of the implement **300**. Moreover, motive power can be sent from the agricultural machine **100** to the implement **300** via the universal joint. While towing the implement **300**, the agricultural machine **100** allows the implement **300** to perform a predetermined task. The linkage device may be provided frontward of the vehicle body **110**. In that case, the implement may be connected frontward of the agricultural machine **100**.

The implement **300** shown in FIG. **49** is a rotary cultivator, for example. The implement **300** to be towed by or attached to a tractor or other work vehicles when traveling in a manner of following rows may be any kind, so long as it is used in operations associated with the interridge land, such as ridge making, intertillage, ridging, weeding, side dressing, and preventive pest control.

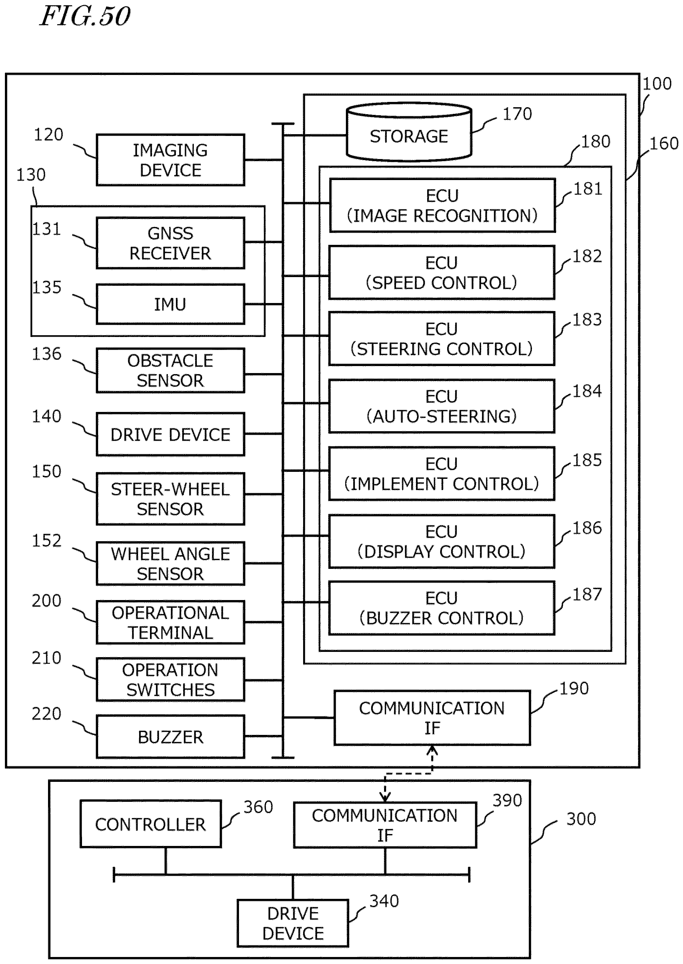

FIG. **50** is a block diagram showing an example of a schematic configuration of the agricultural machine **100** and the implement **300**. The agricultural machine **100** and the implement **300** can communicate with each other via a communication cable that is included in the linkage device **108**.

In addition to the imaging device **120**, the positioning device **130**, the obstacle sensor **136**, and the operational terminal **200**, the agricultural machine **100** in the example of FIG. 50 includes a drive device **140**, a steering wheel sensor **150**, an angle-of-turn sensor (wheel angle sensor) **152**, a control system **160**, a communication interface (IF) **190**, operation switches **210**, and a buzzer **220**. The positioning device **130** includes a GNSS receiver **131**, an RTK receiver **122**, and an inertial measurement unit (IMU) **125**. The control system **160** includes a storage device **170** and a controller **180**. The controller **180** includes a plurality of electronic control units (ECU) **181** to **186**. The implement **300** includes a drive device **340**, a controller **380**, and a communication interface (IF) **390**. Note that FIG. **50** shows component elements which are relatively closely related to the operation of automatic steering or self-driving by the agricultural machine **100**, while other component elements are omitted from illustration.

The positioning device **130** performs positioning of the agricultural machine **100** by utilizing GNSS. In the case where the positioning device **130** includes a RTK receiver, not only GNSS signals transmitted from multiple GNSS satellites, but also a correction signal that is transmitted from a reference station is used. The reference station may be disposed around the field that is traveled by the agricultural machine **100** (e.g., at a position within 10 km of the agricultural machine **100**). The reference station generates a correction signal based on the GNSS signals received from the multiple GNSS satellites, and transmits the correction signal to the positioning device **130**. The GNSS receiver **131** in the positioning device **130** receives the GNSS signals transmitted from the multiple GNSS satellites. Based on the GNSS signals and the correction signal, the positioning device **130** calculates the position of the agricultural machine **100**, thus achieving positioning. Use of an RTK-GNSS enables positioning with an accuracy on the order of several cm of errors, for example. Positional information (including latitude, longitude, and altitude information) is acquired through the highly accurate positioning by an RTK-GNSS. Note that the positioning method is not limited to an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System). The positioning device **130** does not need to be of a positioning type utilizing satellite signals, but may be a device using any other positioning method that recognizes an ego-position. Examples of other positioning method may include methods that measure an ego-position by receiving radio waves from a plurality of radio wave transmitting devices (beacons, Wi-Fi (registered trademark) communication devices, etc.) provided around the field, or from an electromagnetic induction wire or RF-ID embedded in a field. Alternatively, it may be a method that estimates an ego-position by recognizing landmarks or tags in and/or around the field with a camera, etc.

The IMU **135** includes a 3-axis accelerometer and a 3-axis gyroscope. The IMU **135** may include a direction sensor such as a 3-axis geomagnetic sensor. The IMU **135** functions as a motion sensor which can output signals representing parameters such as acceleration, velocity, displacement, and pose of the agricultural machine **100**. Based not only on the GNSS signals and the correction signal but also on a signal that is output from the IMU **135**, the positioning device **130** can estimate the position and orientation of the agricultural machine **100** with a higher accuracy. The signal that is output from the IMU **135** may be used for the correction or complementation of the position that is calculated based on the GNSS signals and the correction signal. The IMU **135** outputs a signal more frequently than the GNSS signals. Utilizing this highly frequent signal allows the position and orientation of the agricultural machine **100** to be measured more frequently (e.g., about 10 Hz or above). Instead of the IMU **135**, a 3-axis accelerometer and a 3-axis gyroscope may be separately provided. The IMU **135** may be provided as a separate device from the positioning device **130**.

In addition to or instead of the GNSS receiver **131** and the IMU **135**, the positioning device **130** may include other kinds of sensors. Depending on the environment that is traveled by the agricultural machine **100**, it is possible to estimate the position and orientation of the agricultural machine **100** with a high accuracy based on data from such sensors.

By using the positioning device **130** as such, it is possible to generate a map of crop rows and ridges as detected by the aforementioned image recognition system **1000**.

For example, the drive device **140** may include various devices that are needed for the traveling of the agricultural machine **100** and the driving of the implement **300**, e.g., the aforementioned prime mover **102**, transmission **103**, differential including a locking differential mechanism, steering device **106**, and linkage device **108**. The prime mover **102** includes an internal combustion engine such as a diesel engine. Instead of an internal combustion engine or in addition to an internal combustion engine, the drive device **140** may include an electric motor that is dedicated to traction purposes.

The steering wheel sensor **150** measures the angle of rotation of the steering wheel of the agricultural machine **100**. The angle-of-turn sensor **152** measures the angle of turn of the front wheels **104F**, which are the wheels responsible for steering. Measurement values by the steering wheel sensor **150** and the angle-of-turn sensor **152** are used for the steering control by the controller **180**.

The storage device **170** includes one or more storage media such as a flash memory or a magnetic disc. The storage device **170** stores various data that is generated by the sensors and the controller **180**. The data that is stored by the storage device **170** may include map data in the environment that is traveled by the agricultural machine **100**, and data of a target path of automatic steering. The storage device **170** also stores a computer program(s) to cause the ECUs in the controller **180** to perform various operations to be described later. Such a computer program(s) may be provided for the agricultural machine **100** via a storage medium (e.g., a semiconductor memory or an optical disc) or through telecommunication lines (e.g., the Internet). Such a computer program(s) may be marketed as commercial software.

The controller **180** includes a plurality of ECUs. The plurality of ECUs include an ECU **181** for image recognition, an ECU **182** for speed control, an ECU **183** for steering control, an ECU **184** for automatic steering control, an ECU **185** for implement control, an ECU **186** for display control, and an ECU **187** for buzzer control. The ECU **181** for image recognition functions as a processing device of the image recognition system. The ECU **182** controls the prime mover **102**, the transmission **103**, and the brakes included in the drive device **140**, thus controlling the speed of the agricultural machine **100**. The ECU **183** controls the hydraulic device or electric motor included in the steering device **106** based on a measurement value of the steering wheel sensor **150**, thus controlling the steering of the agricultural machine **100**. The ECU **184** performs computations and controls for achieving auto-steer driving, based on signals which are output from the positioning device **130**, the steering wheel sensor **150**, and the angle-of-turn sensor **152**. During auto-steer driving, the ECU **184** sends the ECU **183** a command to change the steering angle. In response to this command, the ECU **183** controls the steering device **106** to change the steering angle. In order to cause the implement **300** to perform a desired operation, the ECU **185** controls the operation of the linkage device **108**. Also, the ECU **185** generates a signal to control the operation of the implement **300**, and transmits this signal from the communication IF **190** to the implement **300**. The ECU **186** controls displaying on the operational terminal **200**. For example, the ECU **186** may cause a display device of the operational terminal **200** to present various indications, e.g., a map of the field, detected crop rows or ridges, the position of the agricultural machine **100** and a target path in the map, pop-up notifications, and setting screens. The ECU **187** controls outputting of alarm sounds by the buzzer **220**.

Through the action of these ECUs, the controller **180** realizes driving via manual steering or automatic steering. During usual auto-steer driving, the controller **180** controls the drive device **140** based on the position of the agricultural machine **100** as measured or estimated by the positioning device **130** and the target path stored in the storage device **170**. As a result, in the automatic path travel mode, the controller **180** causes the agricultural machine **100** to travel along the target path. On the other hand, in a row-following control mode where travel is done along the rows, the ECU **181** for image recognition determines from a detected crop row or ridge the edge lines of the crop row or ridge, and generates a target path based on these edge lines. The controller **180** performs an operation in accordance with this target path.

The plurality of ECUs included in the controller **180** may communicate with one another according to a vehicle bus standard such as CAN (Controller Area Network). Although the ECUs **181** to **187** are illustrated as individual corresponding blocks in FIG. **50**, each of these functions may be implemented by a plurality of ECUs. Alternatively, an onboard computer that integrates the functions of at least some of the ECUs **181** to **187** may be provided. The controller **180** may include ECUs other than the ECUs **181** to **187**, and any number of ECUs may be provided in accordance with functionality. Each ECU includes a control circuit including one or more processors.

The communication IF **190** is a circuit that performs communications with the communication IF **390** of the implement **300**. The communication IF **190** performs exchanges of signals complying with an ISOBUS standard such as ISOBUS-TIM, for example, between itself and the communication IF **390** of the implement **300**. This causes the implement **300** to perform a desired operation, or allows information to be acquired from the implement **300**. Moreover, the communication IF **190** can communicate with an external computer via a wired or wireless network. The external computer may be a server computer in a farming support system which centralizes management of information concerning fields by using a cloud, and assists in agriculture by utilizing the data on the cloud, for example.

The operational terminal **200** is a terminal for the operator to perform a manipulation related to the traveling of the agricultural machine **100** and the operation of the implement **300**, and may also be referred to as a virtual terminal (VT). The operational terminal **200** may include a display device such as a touch screen panel, and/or one or more buttons. By manipulating the operational terminal **200**, the operator can perform various manipulations, such as switching ON/OFF the automatic steering mode, switching ON/OFF the cruise control, setting an initial position of the agricultural machine **100**, setting a target path, recording or editing a map, switching between 2WD/4WD, switching ON/OFF the locking differential, and switching ON/OFF the implement **300**. At least some of these manipulations can also be realized by manipulating the operation switches **210**. Displaying on the operational terminal **200** is controlled by the ECU **186**.

The buzzer **220** is an audio output device to present an alarm sound for alerting the operator of an abnormality. For example, during auto-steer driving, the buzzer **220** may present an alarm sound when the agricultural machine **100** has mistracked from the target path by a predetermined distance or more. While row-following travel is not possible, the buzzer **220** may make an alarm sound when the operator manipulates the start switch **112** to issue a command to start row-following travel. Instead of the buzzer **220**, a loudspeaker of the operational terminal **200** may provide a similar function. The buzzer **220** is controlled by the ECU **186**.

The drive device **340** in the implement **300** performs a necessary operation for the implement **300** to perform a predetermined task. The drive device **340** includes devices adapted to the intended use of the implement **300**, e.g., a pump, a hydraulic device, an electric motor, or a pump. The controller **380** controls the operation of the drive device **340**. In response to a signal that is transmitted from the agricultural machine **100** via the communication IF **390**, the controller **380** causes the drive device **340** to perform various operations. Moreover, a signal that is in accordance with the state of the implement **300** may be transmitted from the communication IF **390** to the agricultural machine **100**.

In the above preferred embodiments, the agricultural machine **100** may be an unmanned work vehicle which performs self-driving. In that case, component elements which are only required for human driving, e.g., the cabin, the driver's seat, the steering wheel, and the operational terminal, do not need to be provided in the agricultural machine **100**. The unmanned work vehicle may perform a similar operation to the operation according to any of the above embodiments via autonomous driving, or by remote manipulations by an operator.

A system that provides the various functions according to embodiments can be mounted to an agricultural machine lacking such functions as an add-on. Such a system may be manufactured and sold independently from the agricultural machine. A computer program for use in such a system may also be manufactured and sold independently from the agricultural machine. The computer program may be provided in a form stored in a computer-readable, non-transitory storage medium, for example. The computer program may also be provided through downloading via telecommunication lines (e.g., the Internet).

## INDUSTRIAL APPLICABILITY

The technique according to the present disclosure can be applied to agricultural machines, such as vehicles for crop management, vegetable transplanters, or tractors, for example.

## REFERENCE SIGNS LIST

**10** · · · ground surface, **12** · · · crop row, **14** · · · intermediate region (work path), **16** · · · ridge, **40** · · · image, **42** · · · enhanced image, **44** · · · plan view image, **100** · · · agricultural machine, **110** · · · vehicle body, **120** · · · imaging device, **122** · · · processing device, **1000** · · · image recognition system, **2000** · · · positioning system

## Claims

1.    An agricultural machine comprising:

an image recognition system to detect, from an acquired image, a row region comprising at least one of a crop and a ridge made on a ground surface of a field;

a positioning system to acquire an ego-position;

traveling equipment including a wheel responsible for steering; and

a controller configured to perform either one of: automatic path travel, wherein the traveling equipment is caused to travel along a target path based on an ego-position that is acquired by the positioning system; and row-following travel, wherein the traveling equipment is caused to travel along a row region that is detected by the image recognition system.

2. The agricultural machine of claim 1, comprising a mode switch to select either the automatic path travel or the row-following travel.

3. The agricultural machine of claim 2, wherein

the controller is configured to

determine whether the row-following travel is possible or not based on a result of detection by the image recognition system, and

start the row-following travel when the row-following travel is selected with the mode switch and if it is determined based on a result of detection by the image recognition system that the row-following travel is possible.

4. The agricultural machine of claim 2 or 3, wherein the image recognition system starts detection of crops and ridges with the image recognition system when the row-following travel is selected with the mode switch.

5. The agricultural machine of any one of claims 2 to 4, wherein the controller starts the automatic path travel when the automatic path travel is selected with the mode switch and if it is determined that the automatic path travel is possible.

6. The agricultural machine of claim 5, wherein,

the traveling equipment is capable of manual steering travel, wherein an orientation of the wheel responsible for steering is changed via manual steering of a steering device;

the agricultural machine further comprising an operation member to accept a predetermined manipulation during the manual steering travel, wherein

the controller generates a reference path based on a position of the traveling equipment at a time when the operation member accepts the predetermined manipulation, and when a command to start the automatic path travel has been given, generates the target path by shifting the reference path in a predetermined direction.

7. The agricultural machine of any one of claims 1 to 5, wherein the controller generates a reference path for the automatic path travel during the row-following travel.

8. The agricultural machine of any one of claims 3 to 7, comprising a start switch to command that automatic steering of the wheel responsible for steering be started or ended, wherein

the controller starts or ends the automatic path travel or starts or ends the row-following travel in accordance with a command from the start switch.

9. The agricultural machine of any one of claims 1 to 8, wherein the controller selects either one of the automatic path travel and the row-following travel in accordance with a situation of the field.

10. The agricultural machine of any one of claims 1 to 9, wherein the controller selects either one of the automatic path travel and the row-following travel in accordance with a traveling state of the traveling equipment.

11. The agricultural machine of any one of claims 1 to 8, wherein the controller selects either one of the automatic path travel and the row-following travel in accordance with a status of the positioning system or the image recognition system.

12. The agricultural machine of any one of claims 1 to 8, wherein the controller corrects the target path when a difference between the target path and a position of the row region as detected by the image recognition system becomes equal to or greater than a predetermined value during the automatic path travel.

13. The agricultural machine of any one of claims 1 to 12, wherein the controller acquires coordinates defining the row region as detected by the image recognition system, and generates a map of the row region in the field.

14. The agricultural machine of claim 13, wherein the controller performs matching between the row region detected by the image recognition system and the map to determine a position of the agricultural machine in the field, and performs the automatic path travel or the row-following travel.

15. The agricultural machine of any one of claims 1 to 12, wherein the controller acquires a map of the row region in the field, performs matching between the row region detected by the image recognition system and the map to determine a position of the agricultural machine in the field, and performs the automatic path travel or the row-following travel.

16. The agricultural machine of any one of claims 13 to 15, wherein the controller generates the target path for the automatic path travel based on the map.

## FIG.1

100  1000  180  145

```
┌──────────────────────────────────────────────────────────────┐
│  ┌──────────────┐    ┌──────────┐     ┌──────────────┐        │
│  │    IMAGE     │    │ CONTROL  │     │  TRAVELING   │        │
│  │ RECOGNITION  │◄──►│   LER    │◄───►│  EQUIPMENT   │        │
│  │   SYSTEM     │    │          │     │              │        │
│  └──────────────┘    └──────────┘     └──────────────┘        │
│                                                                │
│  ┌──────────────┐                                              │
│  │ LOCALIZATION │                                              │
│  │   SYSTEM     │◄──                                           │
│  └──────────────┘                                              │
│                                                                │
│  ┌──────────────┐    ┌──────────┐     ┌──────────────┐        │
│  │    START     │    │   MODE   │     │    NOTIFY    │        │
│  │    SWITCH    │    │  SWITCH  │     │              │        │
│  └──────────────┘    └──────────┘     └──────────────┘        │
└──────────────────────────────────────────────────────────────┘
```

112  114  116

## FIG.2

1000  120  122

```
┌──────────────────────────────────────────────┐
│   ┌──────────────┐      ┌──────────────┐      │
│   │   IMAGING    │      │              │      │
│   │   DEVICE     │─────►│  PROCESSOR   │      │
│   │              │      │              │      │
│   └──────────────┘      └──────────────┘      │
└──────────────────────────────────────────────┘
```

FIG.3

*FIG.4*

```
          ┌─────────────┐
          │    START    │
          └──────┬──────┘
                 │
    ┌────────────▼────────────┐
    │  ACQUIRE POSITIONS AND  │
    │  ORIENTATION OF WHEELS  │─── S1
    │    RESPONSIBLE FOR      │
    │       STEERING          │
    └────────────┬────────────┘
                 │
    ┌────────────▼────────────┐  S2
    │   IMAGE RECOGNITION      │
    │       PROCESSING         │
    └────────────┬────────────┘
                 │
                 │        S3
              ╱──▼──╲              No
          ╱  ROW REGION  ╲──────────────────┐
          ╲  IS DETECTED? ╱                  │
              ╲──┬──╱                        │
                 │ Yes                       │
                 │         S4                │
              ╱──▼──╲              No        │
          ╱  WORK PATH   ╲──────────────────┤
          ╲  REGION IS   ╱                  │
          ╲  DETECTED?   ╱                  │
              ╲──┬──╱                        │
                 │ Yes                       │
                 │          S5               │
              ╱──▼──╲               No       │
          ╱  POSSIBLE TO  ╲─────────────────┤
          ╲ PASS THROUGH  ╱                  │
          ╲  WORK PATH?   ╱                  │
              ╲──┬──╱                        │
                 │ Yes    S6          S7     │
    ┌────────────▼────────────┐  ┌──────────▼──────────┐
    │  ROW-FOLLOWING TRAVEL   │  │ ROW-FOLLOWING TRAVEL │
    │      IS POSSIBLE        │  │    IS IMPOSSIBLE     │
    └─────────────────────────┘  └─────────────────────┘
```

*FIG.5*

*FIG.6*

ROW-FOLLOWING TRAVEL IS
IMPOSSIBLE.  MOVE LEFT.

FIG.7A            FIG.7B            FIG.7C

FIG.8

*FIG.9*

*FIG.10*

*FIG.11*

*FIG.12*

*FIG.13*

*FIG.14*

FIG.15

122

26 COMMU-NICATOR

28 STORAGE

30

20 PROCESSOR

22 ROM

24 RAM

*FIG.16*

40

*FIG.17*

42

*FIG.18*

*FIG.19*

FIG.20

*FIG.21*

*FIG.22*

## FIG.23

## FIG.24

SCANNING LINE POSITION

*FIG.25*

```
        ┌─────────────────┐
        │      START      │
        └─────────────────┘
                 │
                 ▼
```

┌──────────────────────────────────┐
│  SET SCANNING LINE DIRECTION      │  ⟋ S10
│         (ANGLE)                    │
└──────────────────────────────────┘
                 │
                 ▼
┌──────────────────────────────────┐
│  TOTAL COLOR INDEX VALUES         │  ⟋ S12
│  ON EACH SCANNING LINE            │
└──────────────────────────────────┘
                 │
                 ▼
┌──────────────────────────────────┐
│  FROM HISTOGRAM OF TOTAL VALUES,  │  ⟋ S14
│  DETERMINE A SCANNING LINE        │
│  DIRECTION THAT IS PARALLEL TO    │
│  CROP ROW                         │
└──────────────────────────────────┘
                 │
                 ▼
┌──────────────────────────────────┐
│  FROM PEAK VALUES OF PEAK VALUE   │  ⟋ S16
│  HISTOGRAM BASED ON SCANNING      │
│  LINES PARALLEL TO CROP ROW,      │
│  DETERMINE EDGE LINE POSITIONS OF │
│  CROP ROW                         │
└──────────────────────────────────┘
                 │
                 ▼
        ┌─────────────────┐
        │       END       │
        └─────────────────┘

*FIG.26*

SCANNING LINE POSITION

*FIG.27*

*FIG.28*

*FIG.29*

SCANNING LINE POSITION

*FIG.30*

12C          12C          12C

W   Wc

B3

B2

B1

*FIG.31*

E   12C   E          E   12C   E          E   12C   E

W   Wc

B3

B2

B1

14          14

FIG.32

FIG.33

SCANNING LINE POSITION

*FIG.34*

*FIG.35*

*FIG.36*

*FIG.37*

FIG.38

FIG.39

FIG.40

*FIG.41*

```
      52                53                54                55
┌──────────────┐  ┌──────────────┐  ┌──────────────┐  ┌──────────────┐
│    IMAGE     │  │   FEATURE    │  │  AMOUNT OF   │  │   FEATURE    │
│ ACQUISITION  │→ │    POINT     │→ │   MOVEMENT   │→ │ POINT HEIGHT │─┐
│              │  │   MATCHING   │  │ CALCULATION  │  │  ESTIMATION  │ │
└──────────────┘  └──────────────┘  └──────────────┘  └──────────────┘ │
                                                                        │
  ┌─────────────────────────────────────────────────────────────────── ┘
  │
  │ ┌──────────────┐  ┌──────────────┐  ┌──────────────┐
  │ │ SCANNING LINE│  │   EDGE LINE  │  │  TARGET PATH │
  └→│   DIRECTION  │→ │   POSITION   │→ │  GENERATION  │
    │ DETERMINATION│  │ DETERMINATION│  │              │
    └──────────────┘  └──────────────┘  └──────────────┘
           56                57                58
```

*FIG.42*

SCANNING LINE POSITION

FIG.43

## FIG.44

## FIG.45

*FIG.46*

*FIG.47*

FIG.48

FIG.49

## FIG.50

*FIG.51*

```
                    ┌─────────┐
                    │  START  │
                    └────┬────┘
                         │
                         ▼
              ╱──────────────────╲
             ╱      MODE SW        ╲    NO
            ╱         IS            ╲──────┐
            ╲     MANIPULATED       ╱      │
             ╲        ?            ╱       │
              ╲──────────────────╱  S500   │
                      │ YES                │
                      │        S501        │
                      ▼                    │
              ╱──────────────────╲         │
             ╱     AUTOMATIC       ╲   NO   │
            ╱    PATH TRAVEL IS     ╲───────┼──────────────────┐
            ╲      SELECTED ?      ╱        │                  │
             ╲──────────────────╱          │   S510           │
                      │ YES   S502         │                  ▼
                      ▼                    │         ╱──────────────────╲
        ┌──────────────────────┐          │        ╱       ROW-          ╲  NO
        │ REFER TO A TARGET PATH│          │       ╱     FOLLOWING         ╲──────┐
        └──────────┬───────────┘          │       ╲    TRAVEL IS          ╱      │
                   │                       │        ╲    POSSIBLE ?       ╱       │
        ┌──────────┤      S503             │         ╲──────────────────╱        │
        │          ▼                       │                 │ YES               │
        │   ╱──────────────────╲           │    S511         │◄─────────────┐    │
        │  ╱    COMMAND TO       ╲  NO      │                 ▼              │    │
        └──╲   START AUTO        ╱──┘       │        ╱──────────────────╲    │    │
            ╲  PATH TRAVEL ?    ╱           │       ╱    COMMAND TO      ╲ NO│    │
             ╲──────────────────╱  S504     │      ╱    START ROW-        ╲──┘    │
                      │ YES                 │      ╲    FOLLOWING        ╱        │
                      ▼                     │       ╲    TRAVEL         ╱         │
        ┌──────────────────────┐           │  S512  ╲──────────────────╱         │
        │ START AUTOMATIC PATH  │           │          │ YES                     │
        │       TRAVEL          │           │          ▼                         │
        └──────────┬───────────┘           │  ┌──────────────────────┐          │
                   │                        │  │  START ROW-FOLLOWING │          │
        ┌──────────┤      S505              │  │       TRAVEL         │          │
        │          ▼                        │  └──────────┬───────────┘          │
        │   ╱──────────────────╲            │             │◄────────────┐        │
        │  ╱    COMMAND TO       ╲  NO    S513│            ▼             │        │
        └──╲   END AUTOMATIC    ╱──┘         │    ╱──────────────────╲  │        │
            ╲  PATH TRAVEL ?   ╱             │   ╱    COMMAND TO      ╲ │        │
             ╲──────────────────╱  S506      │  ╱    END ROW-          ╲NO       │
                      │ YES                  │  ╲    FOLLOWING        ╱─┘        │
                      ▼                      │   ╲    TRAVEL ?       ╱           │
        ┌──────────────────────┐       S514 │    ╲──────────────────╱           │
        │  ENDS AUTOMATIC PATH  │            │        │ YES                      │
        │       TRAVEL          │            │        ▼                          │
        └──────────┬───────────┘            │  ┌──────────────────────┐         │
                   │                         │  │ ENDS ROW-FOLLOWING    │        │
                   │                         │  │      TRAVEL           │        │
                   │                         │  └──────────┬───────────┘        │
                   │◄────────────────────────┴─────────────┘                    │
                   ▼
              ┌─────────┐
              │   END   │
              └─────────┘
```

## INTERNATIONAL SEARCH REPORT

| | International application No. |
| --- | --- |
| | **PCT/JP2022/045041** |

**A. CLASSIFICATION OF SUBJECT MATTER**

*A01B 69/00*(2006.01)i
FI:  A01B69/00 303B; A01B69/00 303P

According to International Patent Classification (IPC) or to both national classification and IPC

**B. FIELDS SEARCHED**

Minimum documentation searched (classification system followed by classification symbols)

A01B69/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2020-124175 A (YANMAR POWER TECHNOLOGY CO., LTD.) 20 August 2020 (2020-08-20)<br>paragraphs [0008]-[0047] | 1-16 |
| Y | JP 9-201110 A (KUBOTA CORP.) 05 August 1997 (1997-08-05)<br>paragraphs [0017]-[0031] | 1-16 |
| Y | JP 2021-7335 A (KUBOTA CORP.) 28 January 2021 (2021-01-28)<br>paragraphs [0024]-[0062] | 6-16 |
| Y | JP 2018-148800 A (YANMAR CO., LTD.) 27 September 2018 (2018-09-27)<br>paragraphs [0046]-[0055] | 12-16 |
| Y | JP 2021-185842 A (KUBOTA CORP.) 13 December 2021 (2021-12-13)<br>paragraphs [0047]-[0075] | 13-16 |

☐ Further documents are listed in the continuation of Box C.     ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **28 December 2022** | **17 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/045041**

| Patent document cited in search report | | | Publication date (day/month/year) | Patent family member(s) | Publication date (day/month/year) |
|---|---|---|---|---|---|
| JP | 2020-124175 | A | 20 August 2020 | (Family: none) | |
| JP | 9-201110 | A | 05 August 1997 | (Family: none) | |
| JP | 2021-7335 | A | 28 January 2021 | (Family: none) | |
| JP | 2018-148800 | A | 27 September 2018 | (Family: none) | |
| JP | 2021-185842 | A | 13 December 2021 | (Family: none) | |

Form PCT/ISA/210 (patent family annex) (January 2015)

**EP 4 437 821 A1**